(19) Europäisches Patentamt
European Patent Office
Office européen des brevets

(11) **EP 4 546 247 A1**

(12) **EUROPEAN PATENT APPLICATION**
published in accordance with Art. 153(4) EPC

(43) Date of publication:
30.04.2025 Bulletin 2025/18

(51) International Patent Classification (IPC):
*G06Q 50/06* (2024.01)     *F24H 1/18* (2022.01)
*F24H 15/168* (2022.01)     *F24H 15/20* (2022.01)
*F24H 15/277* (2022.01)     *F24H 15/296* (2022.01)
*F24H 15/30* (2022.01)     *F24H 15/395* (2022.01)

(21) Application number: 23826872.6

(22) Date of filing: 23.05.2023

(52) Cooperative Patent Classification (CPC):
**F24H 1/18; F24H 15/168; F24H 15/20;**
**F24H 15/277; F24H 15/296; F24H 15/30;**
**F24H 15/395; G06Q 50/06**

(86) International application number:
**PCT/JP2023/019141**

(87) International publication number:
**WO 2023/248684 (28.12.2023 Gazette 2023/52)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: 23.06.2022 JP 2022101073

(71) Applicant: Panasonic Intellectual Property
Management Co., Ltd.
Kadoma-shi, Osaka 571-0057 (JP)

(72) Inventors:
• **SHIMIZU, Noriyoshi**
**Kadoma-shi, Osaka 571-0057 (JP)**
• **FUSAKAWA, Kazue**
**Kadoma-shi, Osaka 571-0057 (JP)**
• **SUZUKI, Fumiaki**
**Kadoma-shi, Osaka 571-0057 (JP)**
• **OKAICHI, Atsuo**
**Kadoma-shi, Osaka 571-0057 (JP)**

(74) Representative: **Appelt, Christian W.**
**Boehmert & Boehmert**
**Anwaltspartnerschaft mbB**
**Pettenkoferstrasse 22**
**80336 München (DE)**

(54) **WATER HEATER SYSTEM AND WATER HEATER METHOD**

(57)     A hot water supply system (100) includes: an obtainer (120) that obtains (i) a first boiling amount for each of a plurality of water heaters and (ii) a reference power of a housing complex (40) in which the plurality of water heaters are provided, the reference power being from a second time slot having a cheap electricity rate; a determiner (130) that, when determining, based on the plurality of first boiling amounts, that a demand power of the housing complex (40) as a whole will exceed the reference power if the plurality of water heaters start boiling simultaneously in the second time slot, determines, prior to the second time slot, a schedule that, of a first water heater (11a) and a second water heater (11b) included in the plurality of water heaters, delays a start of boiling by the second water heater (11b), for which the first boiling amount is lower; and a controller (140) that controls boiling by the plurality of water heaters in the second time slot based on the schedule determined.

EP 4 546 247 A1

# FIG. 1

**Description**

[Technical Field]

The present invention relates to a hot water supply system and a hot water supply method.

[Background Art]

Patent Literature (PTL) 1 discloses a storage-type water heater. Such a storage-type water heater generally stores hot water boiled during a time slot when electricity rates are low in a storage tank, and then supplies that hot water as necessary. The time slot when electricity rates are low is, for example, a nighttime time slot.

[Citation List]

[Patent Literature]

[PTL 1] Japanese Unexamined Patent Application Publication No. 2012-225601

[Summary of Invention]

[Technical Problem]

A plurality of the water heaters disclosed in PTL 1 may be installed in a housing complex, for example. In such a case, if the water heaters start boiling at the same time during a nighttime time slot, the overall demand power of the housing complex at that time may become extremely high.
Incidentally, the types of contracts for supplying power to a housing complex include a high-voltage collective power reception contract. In such a contract, the management company or management association of the housing complex enters into a contract with the power company, and a user in each household then enters into a contract with the manager or management association of the housing complex. In a high-voltage collective power reception contract, a reference power, which is a reference value (an upper limit value) for the overall demand power of the housing complex, is set. If the reference power is exceeded, a contract in which the reference power is increased and the electricity rate is raised will be required in the next fiscal year.
Accordingly, if the overall demand power of a housing complex becomes extremely high due to boiling by a plurality of water heaters as described above, the demand power (and more specifically, a maximum value of the demand power) may exceed the reference power and cause the electricity rate to rise as a result. Problems such as breakers tripping also occur when the demand power increases.
The present invention provides a hot water supply system and the like capable of suppressing the maximum value of the overall demand power of a housing complex.

[Solution to Problem]

A hot water supply system according to one aspect of the present invention includes: an obtainer that obtains (i) a first boiling amount for each of a plurality of water heaters and (ii) a reference power of a housing complex in which the plurality of water heaters are provided, the reference power being from a second time slot having a cheaper electricity rate than a first time slot; a determiner that, when determining, based on the plurality of first boiling amounts obtained, that a demand power of the housing complex as a whole will exceed the reference power obtained if the plurality of water heaters start boiling simultaneously in the second time slot, determines, prior to the second time slot, a schedule that, of a first water heater and a second water heater included in the plurality of water heaters, delays a start of boiling by the second water heater, for which the first boiling amount is lower than the first water heater; and a controller that controls boiling by the plurality of water heaters in the second time slot based on the schedule determined.
A hot water supply method according to one aspect of the present invention includes: obtaining (i) a first boiling amount for each of a plurality of water heaters, and (ii) a reference power of a housing complex in which the plurality of water heaters are provided, the reference power being from a second time slot having a cheaper electricity rate than a first time slot; when it is determined, based on the plurality of first boiling amounts obtained, that a demand power of the housing complex as a whole will exceed the reference power obtained if the plurality of water heaters start boiling simultaneously in the second time slot, determining, prior to the second time slot, a schedule that, of a first water heater and a second water heater included in the plurality of water heaters, delays a start of boiling by the second water heater, for which the first boiling amount is lower than the first water heater; and controlling boiling by the plurality of water heaters in the second time slot based on the schedule determined.

[Advantageous Effects of Invention]

The hot water supply system and the like of the present invention make it possible to suppress the maximum value of the overall demand power of a housing complex.

[Brief Description of Drawings]

[FIG. 1]

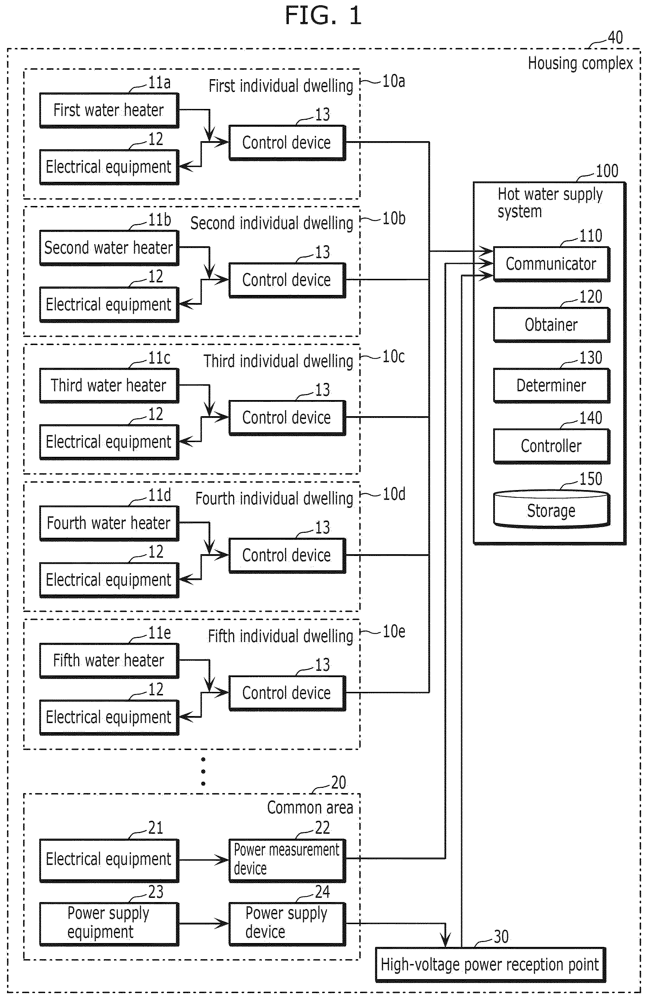

FIG. 1 is a block diagram illustrating the functional configuration of a hot water supply system according to Embodiment 1.
[FIG. 2]

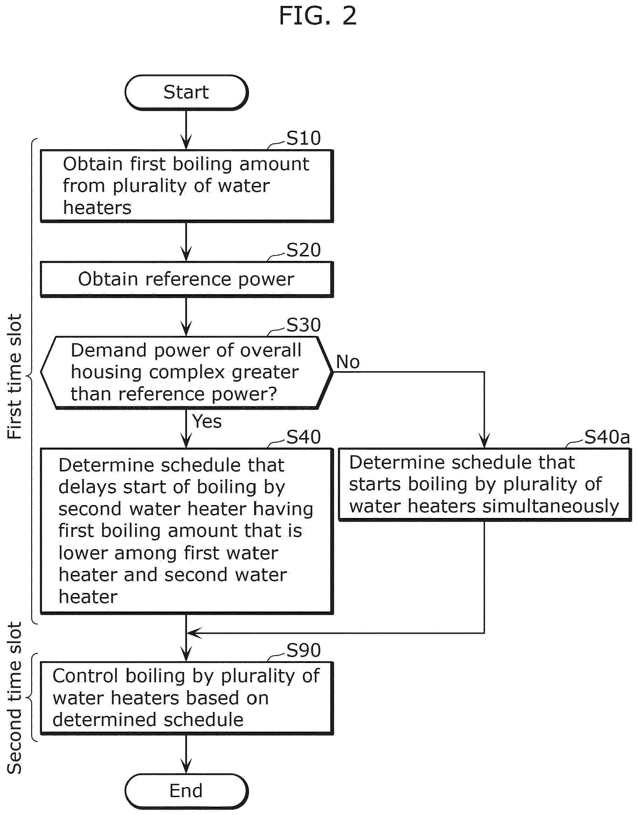

FIG. 2 is a flowchart of Operation Example 1 according to Embodiment 1.
[FIG. 3]

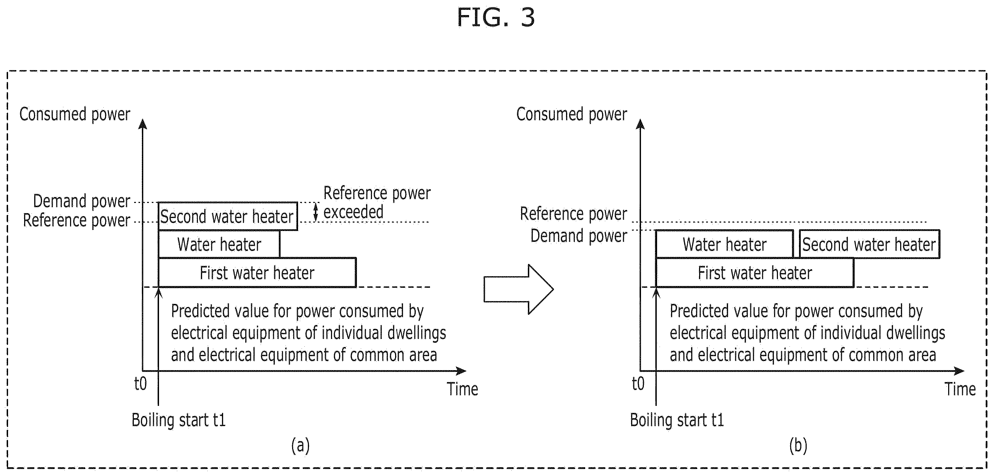

FIG. 3 is a diagram illustrating a schedule according to Embodiment 1.
[FIG. 4]

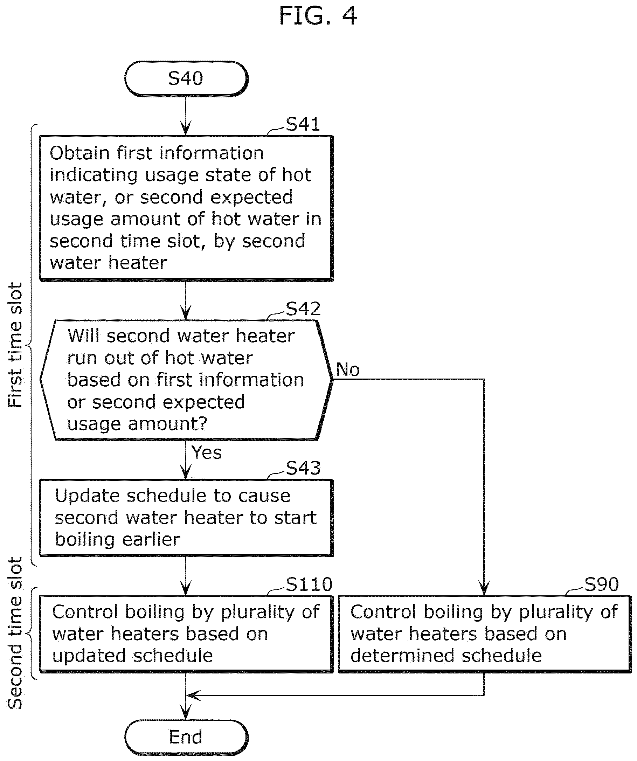

FIG. 4 is a flowchart of Operation Example 2 according to Embodiment 1.
[FIG. 5]

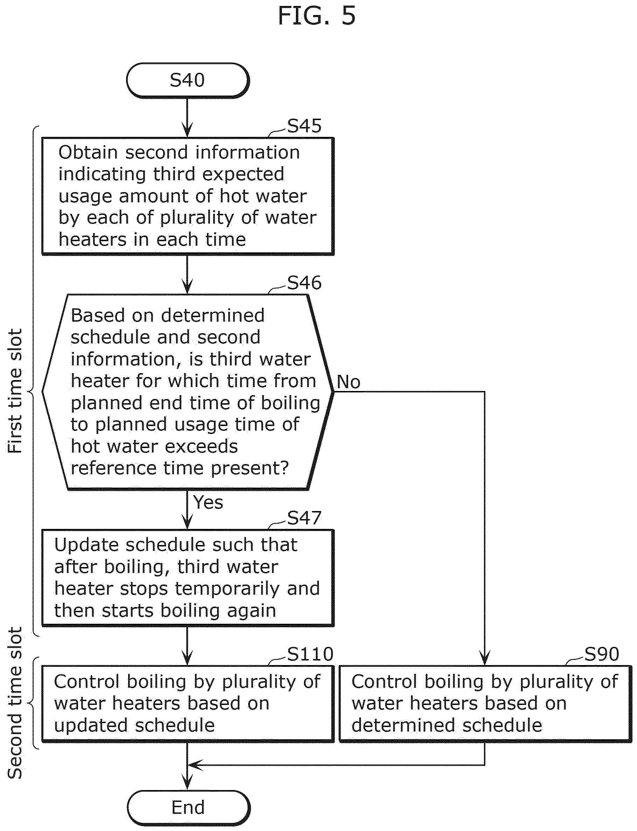

FIG. 5 is a flowchart of Operation Example 3 according to Embodiment 1.
[FIG. 6]

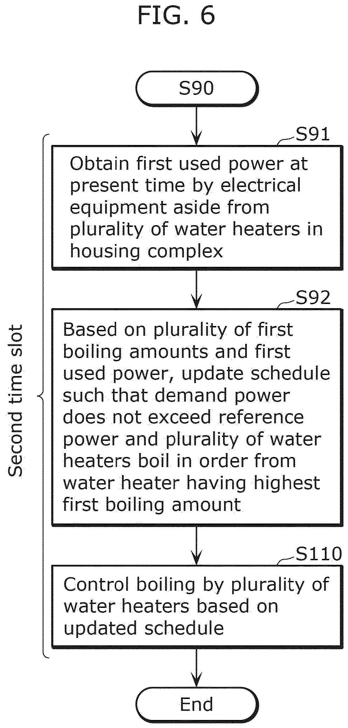

FIG. 6 is a flowchart of Operation Example 4 according to Embodiment 1.
[FIG. 7]

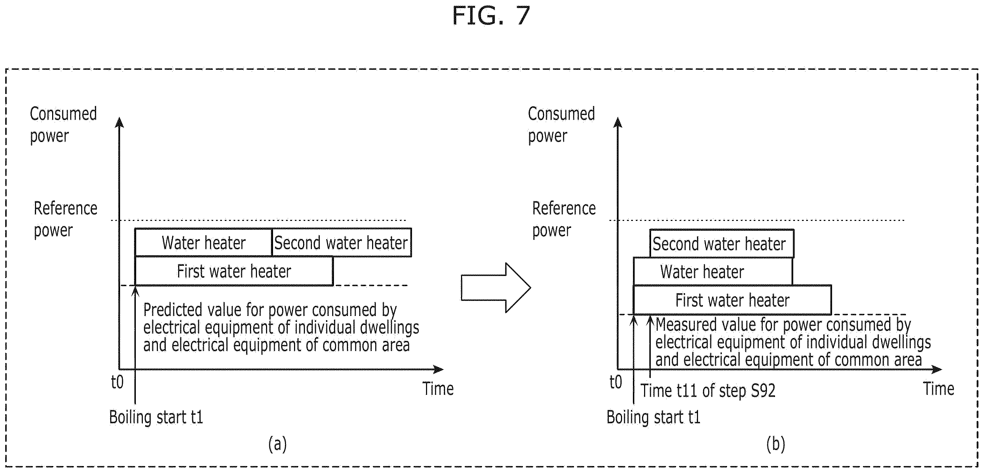

FIG. 7 is a diagram illustrating updating of the schedule through step S92 in Operation Example 4 according to Embodiment 1.
[FIG. 8]

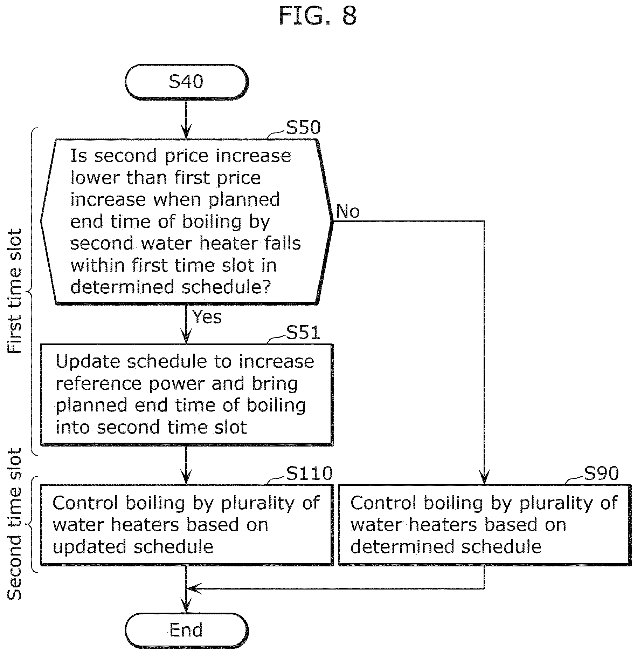

FIG. 8 is a flowchart of Operation Example 5 according to Embodiment 1.
[FIG. 9]

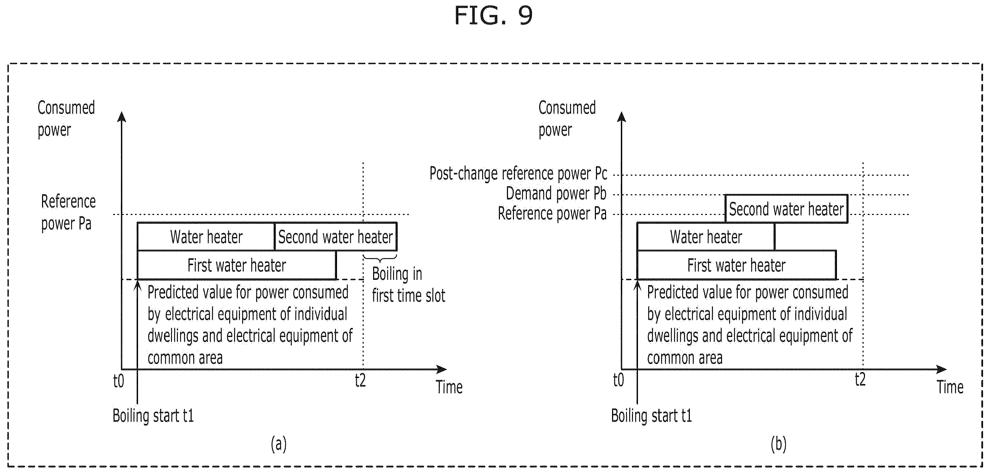

FIG. 9 is a diagram illustrating a schedule updated through the processing of Operation Example 5 according to Embodiment 1.
[FIG. 10]

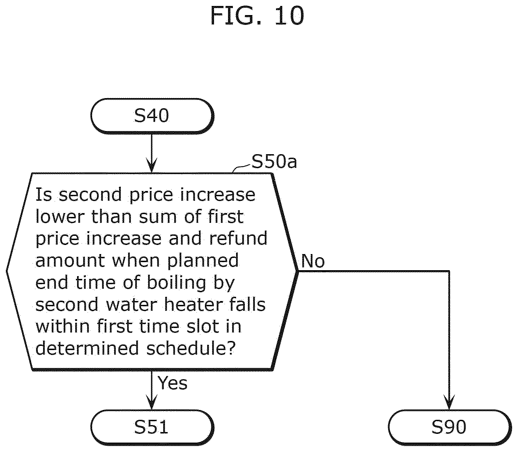

FIG. 10 is a flowchart of Variation 1 on Operation Example 5 according to Embodiment 1.
[FIG. 11]

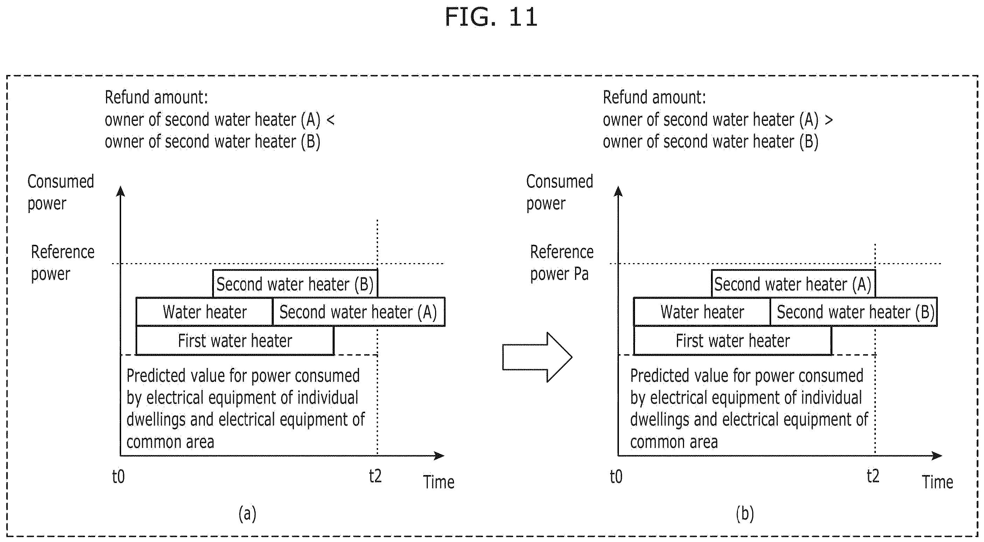

FIG. 11 is a diagram illustrating a schedule when a plurality of second water heaters are provided, according to Embodiment 1.
[FIG. 12]

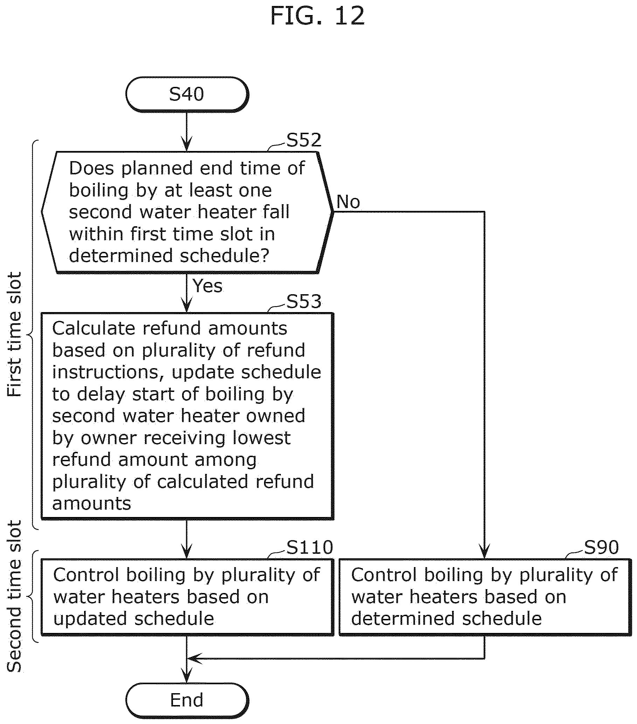

FIG. 12 is a flowchart of Variation 2 on Operation Example 5 according to Embodiment 1.
[FIG. 13]

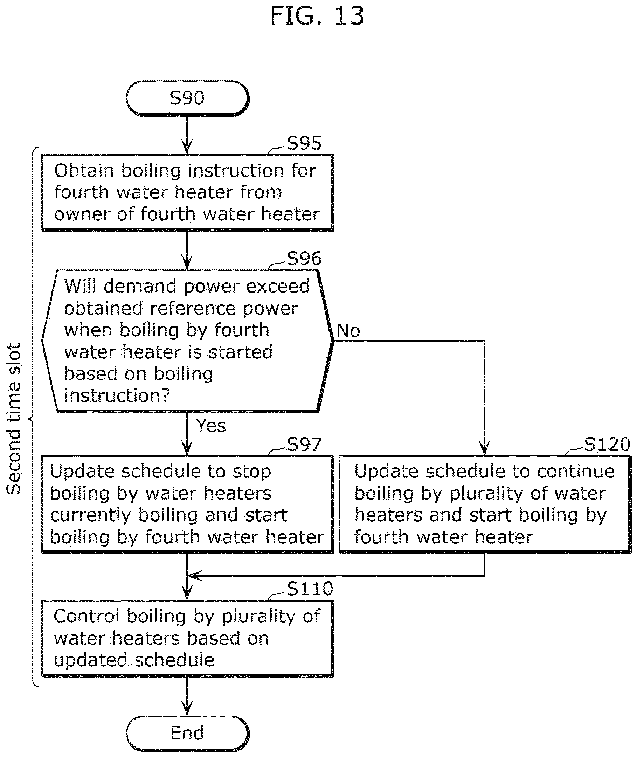

FIG. 13 is a flowchart of Operation Example 6 according to Embodiment 1.
[FIG. 14]

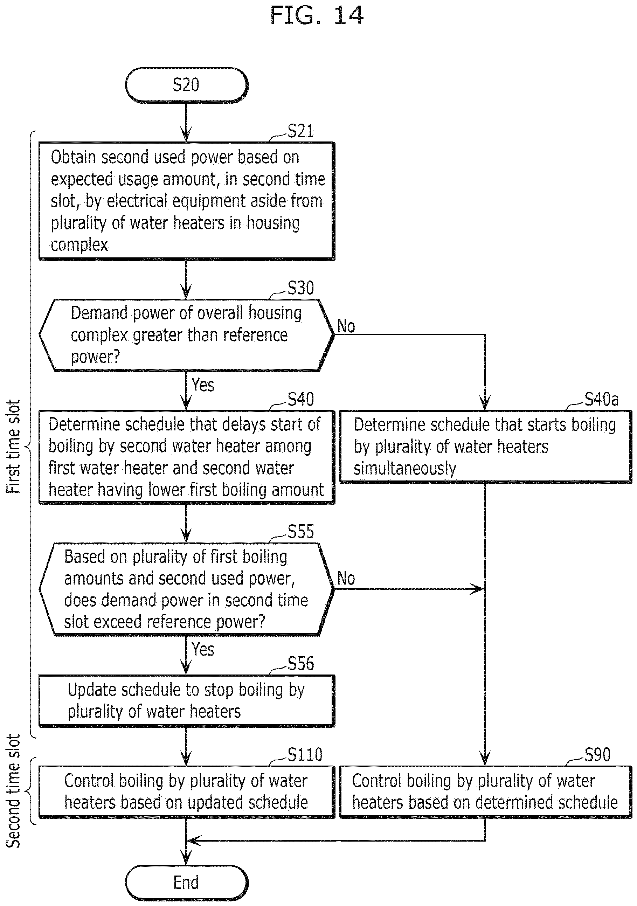

FIG. 14 is a flowchart of Operation Example 7 according to Embodiment 1.
[FIG. 15]

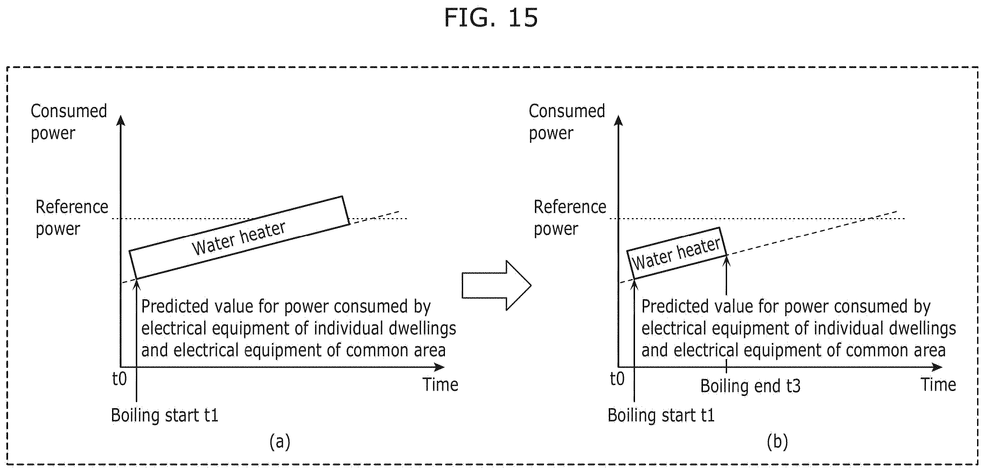

FIG. 15 is a diagram illustrating a schedule when it is determined that a demand power will exceed a reference power in Operation Example 7 according to Embodiment 1.
[FIG. 16]

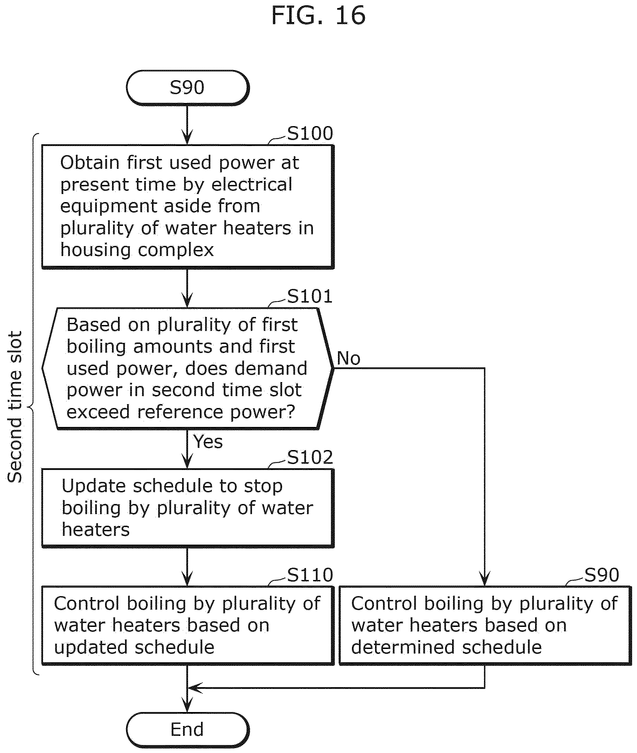

FIG. 16 is a flowchart of Operation Example 8 according to Embodiment 1.
[FIG. 17]

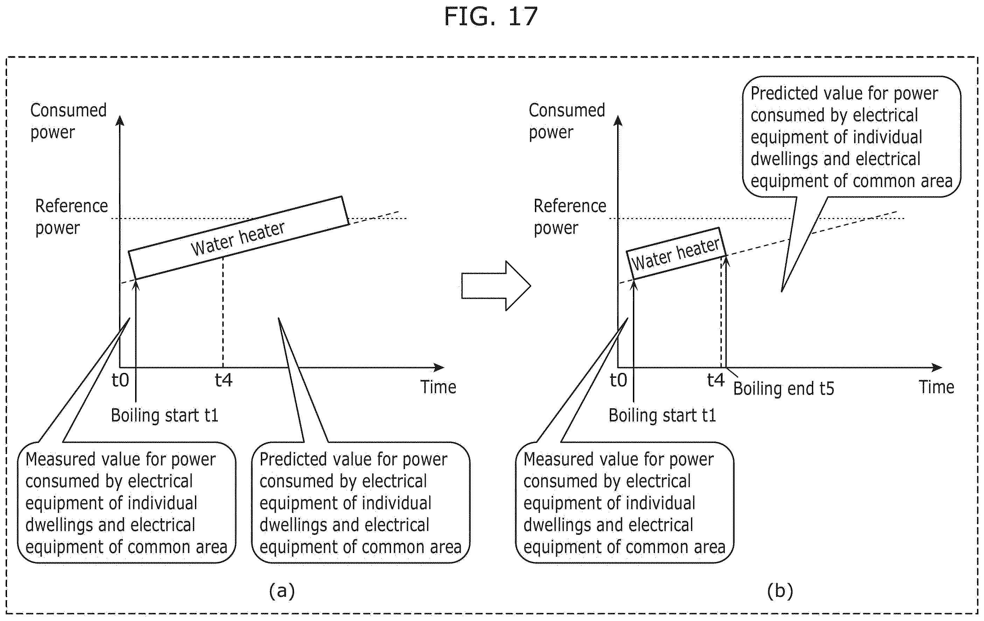

FIG. 17 is a diagram illustrating a schedule when a demand power is determined to exceed a reference power in Operation Example 8 according to Embodiment 1.
[FIG. 18]

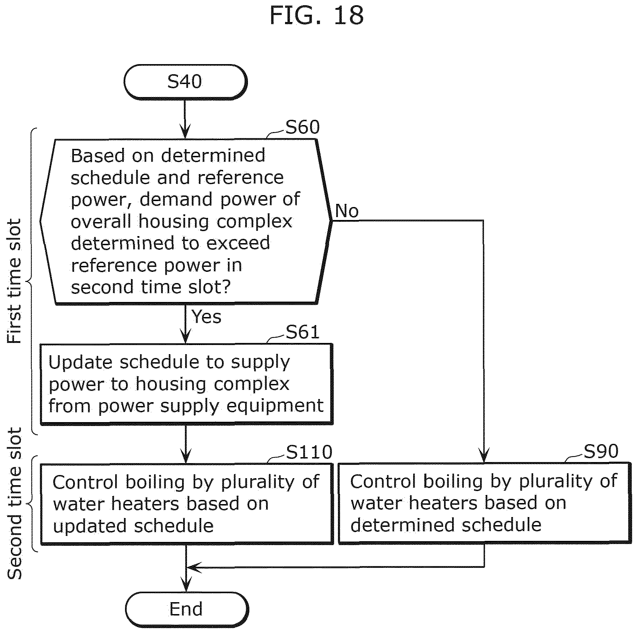

FIG. 18 is a flowchart of Operation Example 9 according to Embodiment 1.
[FIG. 19]

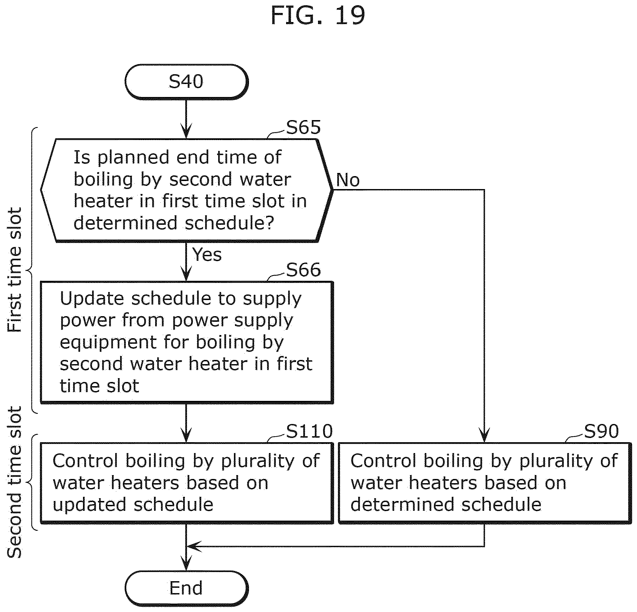

FIG. 19 is a flowchart of Operation Example 10 according to Embodiment 1.
[FIG. 20]

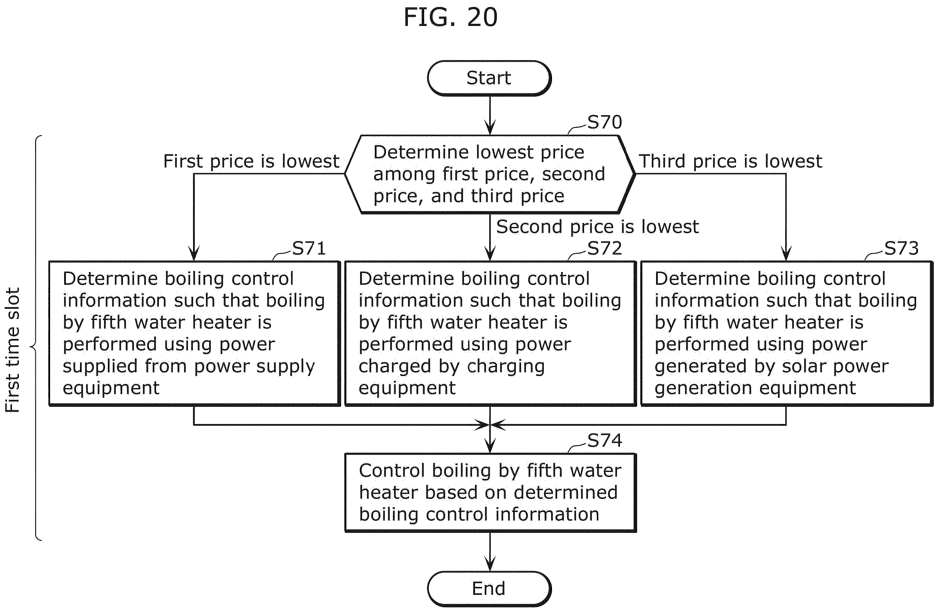

FIG. 20 is a flowchart of Operation Example 11 according to Embodiment 1.
[FIG. 21]

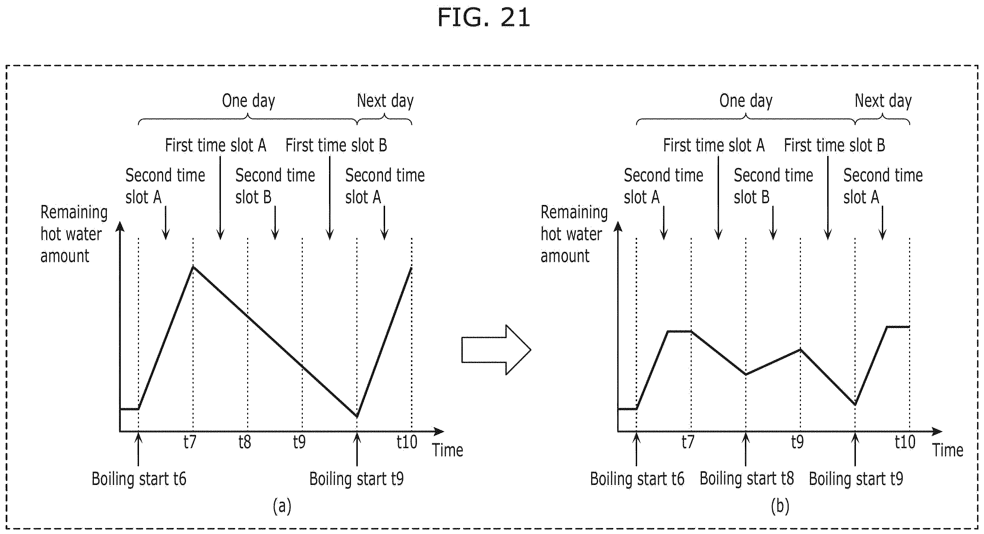

FIG. 21 is a diagram illustrating a change in a remaining hot water amount in Operation Example 12 according to Embodiment 1.
[FIG. 22]

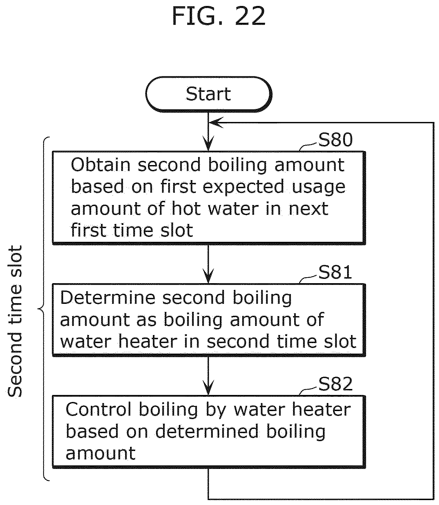

FIG. 22 is a flowchart of Operation Example 12 according to Embodiment 1.
[FIG. 23]

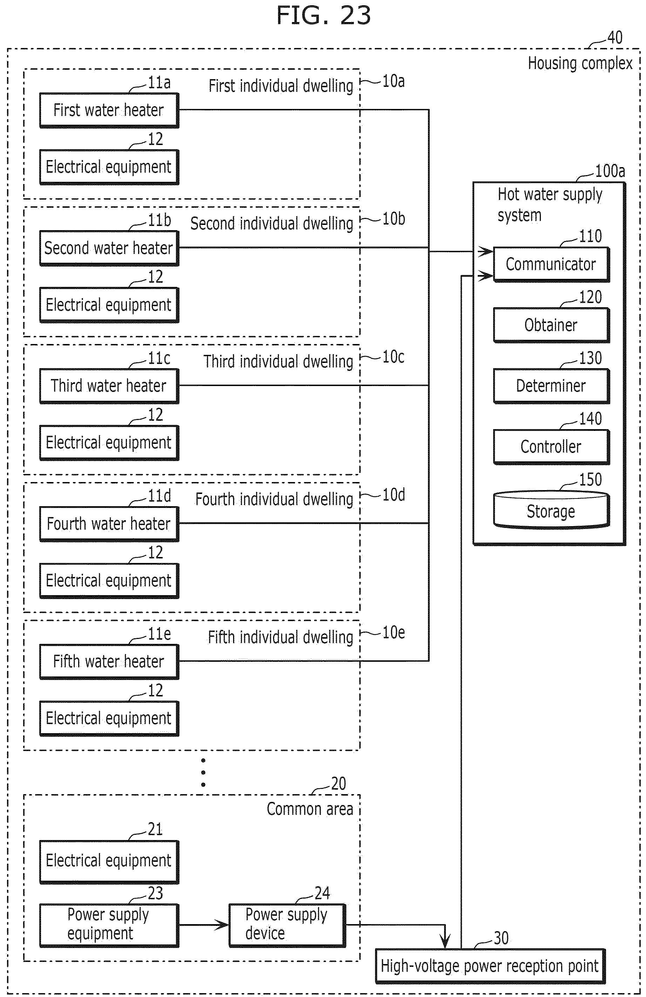

FIG. 23 is a block diagram illustrating the functional configuration of a hot water supply system according to Embodiment 2.

[Description of Embodiments]

Embodiments will be described in detail hereinafter with reference to the drawings. The following embodiments will describe general or specific examples. The numerical values, shapes, materials, constituent elements, arrangements and connection states of constituent elements, steps, orders of steps, and the like in the following embodiments are merely examples, and are not intended to limit the present invention. Additionally, of the constituent elements in the following embodiments, constituent elements not denoted in the independent claims will be described as optional constituent elements.

Note also that the drawings are schematic diagrams, and are not necessarily exact illustrations. Configurations that are substantially the same are given the same reference signs in the drawings, and redundant descriptions may be omitted or simplified.

[Embodiment 1]

[Configuration]

The configuration of hot water supply system 100 according to the present embodiment will be described.

FIG. 1 is a block diagram illustrating the functional configuration of hot water supply system 100 according to the present embodiment.

Hot water supply system 100 is a system installed in housing complex 40, and suppresses a maximum value of an overall demand power of housing complex 40 by controlling a plurality of water heaters installed in housing complex 40.

In housing complex 40 according to the present embodiment, a high-voltage collective power reception contract is selected as the type of contract for supplying power to housing complex 40. In this contract, two types of time slots having different electricity rates are provided, namely a first time slot, and a second time slot in which the electricity rate is lower than in the first time slot.

For example, the first time slot is a time slot other than at night, and the second time slot is a time slot at night. Unless otherwise stated, the first time slot in which the electricity rate is higher is from 7 AM to 11 PM, the second time slot in which the electricity rate is lower is from 11 PM to 7 AM on the next day, and the first time slot and the second time slot are consecutive time slots. In general, hot water stored in a water heater has a higher usage amount and usage frequency in the first time slot other than at night, and a low usage amount and usage frequency in the second time slot at night.

Hot water supply system 100 according to the present embodiment determines a schedule for boiling by the plurality of water heaters before the start of the second time slot, i.e., during the first time slot, and controls the plurality of water heaters based on the schedule determined.

Housing complex 40 is a facility including a plurality of households and common area 20, and is, for example, an apartment building or the like.

The number of households in housing complex 40 is, for example, in the teens, 20 to 100, or hundreds, but is not limited thereto. Here, each of the plurality of households is an individual dwelling (i.e., a residence) of a resident, and may be referred to as first individual dwelling 10a, second individual dwelling 10b, third individual dwelling 10c, fourth individual dwelling 10d, and fifth individual dwelling 10e for identification. The plurality of households also includes a plurality of other individual dwellings in addition to first to fifth individual dwellings 10a to 10e.

Each of the plurality of households includes a water heater, electrical equipment 12, and control device 13. In other words, each of the plurality of water heaters installed in housing complex 40 is a water heater provided for a corresponding one of the plurality of households, and more specifically, is a storage-type water heater. For identification, the water heaters provided in first to fifth individual dwellings 10a to 10e will be referred to as first to fifth water heaters 11a to 11e. In other words, the plurality of water heaters includes first to fifth water heaters 11a to 11e. When there is no particular need for identification, these may simply be referred to as "water heaters". Each of the plurality of water heaters communicates with a respective one of a plurality of control devices 13.

Electrical equipment 12 and control device 13 have the same functions throughout the plurality of households, and thus electrical equipment 12 and control device 13 provided in first individual dwelling 10a will be described here as an example.

"Electrical equipment 12" refers to all electrical equipment in first individual dwelling 10a aside from first water heater 11a. For example, electrical equipment 12 includes household appliances such as lighting fixtures, air conditioners, and the like in first individual dwelling 10a.

Control device 13 is a device for communicating with and controlling first water heater 11a and electrical equipment 12 in first individual dwelling 10a. More specifically, control device 13 is what is known as a Home Energy Management System (HEMS) controller that monitors or controls the operating states of first water heater 11a and electrical equipment 12 by communicating with first water heater 11a and electrical equipment 12. For example, through this communication, control device 13 obtains, from first water heater 11a, the remaining hot water amount in a storage tank of first water heater 11a (also called a "stored hot water amount"). Control device 13 also communicates with hot water supply system 100.

Control device 13 includes an acceptor that accepts operations from an owner (i.e., a resident) of first individual dwelling 10a. Specifically, the acceptor is realized by a touch panel or the like. This acceptor accepts, from the owner of first individual dwelling 10a, an operation instructing a target boiling amount for first water heater 11a, for example.

The target boiling amount is a target amount for the remaining hot water amount in the storage tank (the stored hot water amount) of first water heater 11a for when the boiling by first water heater 11a is completed by hot water supply system 100. It should be noted that control device 13 may determine a value obtained by subtracting (i) the remaining hot water amount in the storage tank of first water heater 11a (more specifically, the stored hot water amount from before the boiling) obtained from (ii) the target boiling amount indicated by the accepted instruction as the first boiling amount of first water heater 11a. Control device 13 outputs the determined first boiling amount to hot water supply system 100.

In addition, control device 13 outputs, to hot water supply system 100, individual dwelling power information about the power used by electrical equipment 12.

The individual dwelling power information includes information indicating, for electrical equipment 12, an expected used power based on an expected usage amount for a predetermined time slot (e.g., the second time slot) on a given day. For example, at 10 PM, which corresponds to the first time slot on that day, control device 13 predicts and determines the expected used power for the second time slot starting at 11 PM on that day, based on the past used power amount for electrical equipment 12 on that day. In this case, as the expected used power for electrical equipment 12 for that day, control device 13 determines an average value of the power used by electrical equipment 12 in the second time slot over a past predetermined period (e.g., a period of one week in the past from the previous day). The individual dwelling power information also includes information indicating the power used by electrical equipment 12 at the present time in a predetermined time slot (e.g., the second time slot) on a given day. Control device 13 outputs such individual dwelling power information to hot water supply system 100.

Common area 20 in housing complex 40 is, for example, an area other than the plurality of households (residences) in housing complex 40, and is a common space such as hallways, the roof, gardens, staircases, and the like, for example.

Electrical equipment 21 and power measurement device 22 are installed in common area 20. Lighting, elevators, water pumps, and the like, for example, fall under electrical equipment 21. Power measurement device 22 measures the power used by electrical equipment 21 and outputs the measured power used to hot water supply system 100.

Furthermore, power measurement device 22 outputs, to hot water supply system 100, common area power information about the power used by electrical equipment 21. The common area power information includes information indicating, for electrical equipment 21, an expected used power based on an expected usage amount for a predetermined time slot (e.g., the second time slot) on a given day. For example, at 10 PM, which corresponds to the first time slot on that day, power measurement device 22 predicts and determines the expected used power for the second time slot starting at 11 PM on that day, based on the past used power amount for electrical equipment 21 on that day. In this case, as the expected used power for electrical equipment 21 for that day, power measurement device 22 determines an average value of the power used by electrical equipment 21 in the second time slot over a past predetermined period (e.g., a period of one week in the past from the previous day). The common area power information also includes information indicating the power used by electrical equipment 21 at the present time in a predetermined time slot (e.g., the second time slot) on a given day. Control device 13 outputs such common area power information to hot water supply system 100.

Power supply equipment 23 and power supply device 24 are also installed in common area 20. Solar power generation equipment, charging equipment, and the like, for example, fall under power supply equipment 23. In other words, in the present embodiment, housing complex 40 includes power supply equipment 23 and power supply device 24, and power supply equipment 23 includes solar power generation equipment and charging equipment (e.g., storage batteries and electric automobiles).

Power supply device 24 outputs the power output from power supply equipment 23 to high-voltage power reception point 30. High-voltage power reception point 30 receives high-voltage power supplied by a power company and supplies the received power to a plurality of households. In addition, if power supply device 24 outputs the power output from power supply equipment 23 to high-voltage power reception point 30, high-voltage power reception point 30 receives the power supplied from power supply device 24 and supplies the received power to the plurality of households (a plurality of water heaters, for example).

The constituent elements of hot water supply system 100 will be described here.

As illustrated in FIG. 1, hot water supply system 100 includes communicator 110, obtainer 120, determiner 130, controller 140, and storage 150. Hot water supply system 100 is, for example, a personal computer, but may also be a server device or the like.

Communicator 110 is communication circuitry for hot water supply system 100 to communicate with control device 13 provided in each of the plurality of households, power measurement device 22 of common area 20, and high-voltage power reception point 30. In the present embodiment, communicator 110 is circuitry for wireless communication, and communicator 110 communicates wirelessly according to various communication standards. Note that communicator 110 may be circuitry for communicating over wires.

For example, communicator 110 obtains a first boiling amount for each of the plurality of water heaters from control device 13 of each of the plurality of households. In other words, for example, communicator 110 obtains the first boiling amount of first water heater 11a from control device 13 of first individual dwelling 10a, and obtains the first boiling amount of second water heater 11b from control device 13 of second individual dwelling 10b.

For example, as described above, the first boiling amount of first water heater 11a corresponds to a value obtained by subtracting, from the target boiling amount, the remaining hot water amount in the storage tank of first water heater 11a. More specifically, the first boiling amount is the amount of hot water to be stored in the storage tank of first water heater 11a during the second time slot, which is when the electricity rate is lower. Note that communicator 110 preferably obtains the target boiling amount and the remaining hot water amount in the storage tank from each of the plurality of control devices 13 before boiling.

Obtainer 120 is a processor that obtains the first boiling amount for each of the plurality of water heaters and a reference power for the second time slot. More specifically, obtainer 120 obtains the first boiling amount for each of the plurality of water heaters obtained by communicator 110, and obtains the reference power for the second time slot stored in storage 150.

Determiner 130 determines a schedule based on the plurality of first boiling amounts obtained by obtainer 120 and the reference power obtained by obtainer 120. The schedule indicates a planned start time and a planned end time for the boiling by each of the plurality of water heaters. The schedule is, for example, a schedule for the boiling by each of the plurality of water heaters in the second time slot. The schedule further indicates a supply source that supplies power required for the boiling by each of the plurality of water heaters. Examples of the supply source include a power company, power supply equipment 23, and the like.

Controller 140 is a processor that controls the boiling by the plurality of water heaters based on the schedule determined by determiner 130. Here, controller 140 causes communicator 110 to output, to each of the plurality of control devices 13, a control signal instructing the plurality of water heaters to boil as indicated by the determined schedule.

As a result, each of the plurality of control devices 13 controls the corresponding one of the plurality of water heaters according to the control signal output from communicator 110.

Each of obtainer 120, determiner 130, and controller 140 is realized by a microcomputer, for example, but may be realized by a processor or dedicated circuitry. The respective functions of obtainer 120, determiner 130, and controller 140 are realized by hardware such as microcomputers constituting obtainer 120, determiner 130, and controller 140, respectively, executing software stored in storage 150.

Storage 150 is a storage device that stores information necessary for information processing for controlling the plurality of water heaters, such as software executed by obtainer 120, determiner 130, and controller 140. Storage 150 is realized by semiconductor memory or the like, for example.

Operations performed in hot water supply system 100 according to the present embodiment having the foregoing configuration will be described next.

[Operation Example 1]

FIG. 2 is a flowchart of Operation Example 1 according to the present embodiment.

As illustrated in FIG. 2, steps S10, S20, S30, S40, and S40a are processing performed in the first time slot, and step S90 is processing performed in the second time slot.

First, obtainer 120 obtains the first boiling amount for each of the plurality of water heaters (S10). Before step S10 is performed, each of the plurality of control devices 13 determines the first boiling amount, and communicator 110 obtains the determined plurality of first boiling amounts from the corresponding ones of the plurality of control devices 13, as described above. Then, in step S10, obtainer 120 obtains the plurality of first boiling amounts obtained by communicator 110.

In step S10, it is preferable that obtainer 120 has obtained the target boiling amount and the remaining hot water amount in the storage tank for each of the plurality of water heaters, obtained by communicator 110.

Next, obtainer 120 obtains the reference power for the second time slot, stored in storage 150 (S20). The reference power for the second time slot is a reference power specified in a high-voltage collective power reception contract, and is a reference power for housing complex 40 in which the plurality of water heaters are installed. If the demand power of housing complex 40 as a whole exceeds the reference power, a contract in which the reference power is increased and the electricity rate is raised will be required for the next fiscal year.

Note that step S10 and step S20 correspond to a step of obtaining.

After the processing of step S10 and step S20, obtainer 120 obtains the individual dwelling power information about the power used by electrical equipment 12, and the common area power information about the power used by electrical equipment 21. More specifically, communicator 110 obtains the individual dwelling power information from each of the plurality of control devices 13 and the common area power information from power measurement device 22, and obtainer 120 obtains the individual dwelling power information and the common area power information obtained by communicator 110.

Accordingly, obtainer 120 obtains information indicating the expected used power based on the expected usage amount, in the second time slot, for electrical equipment 12 included in the individual dwelling power information. Likewise, obtainer 120 obtains information indicating the expected used power based on the expected usage amount, in the second time slot, for electrical equipment 21 included in the common area power information. In the present embodiment, all of the plurality of electrical equipment 12 in the plurality of households and electrical equipment 21 in common area 20 constitute electrical equipment aside from the plurality of water heaters in housing complex 40. Accordingly, it can also be said that obtainer 120 obtains a second used power based on the expected usage amount, in the second time slot, by the electrical equipment aside from the plurality of water heaters in housing complex 40.

Note that the "second used power" is information that integrates the expected used power, in the second time slot, for electrical equipment 12 indicated by the individual dwelling power information, and the expected used power, in the second time slot, for electrical equipment 21 indicated by the common area power information.

In this manner, after the processing of step S10 and step S20 (the first time slot), obtainer 120 obtains the second used power, which corresponds to the expected power amount, in the second time slot, of the electrical equipment aside from the plurality of water heaters in housing complex 40.

Furthermore, based on the plurality of first boiling amounts obtained by obtainer 120, determiner 130 determines whether the demand power of housing complex 40 as a whole will exceed the obtained reference power if the plurality of water heaters start boiling at the same time in the second time slot (S30). More specifically, this determination is made based on the plurality of first boiling amounts and the obtained second used power (an expected power amount in second time slot).

Subsequently, if determiner 130 determines that the demand power will exceed the reference power (Yes in S30), determiner 130 determines the following schedule prior to the second time slot, i.e., the first time slot, in this instance. Determiner 130 determines a schedule that delays the start of boiling by second water heater 11b, among first water heater 11a and second water heater 11b, which has a lower first boiling amount than first water heater 11a (S40).

Step S30 and step S40 will be described in more detail with reference to FIG. 3.

FIG. 3 is a diagram illustrating the schedule according to the present embodiment. More specifically, (a) of FIG. 3 is a diagram illustrating the schedule when the plurality of water heaters start boiling at the same time, and (b) of FIG. 3 is a diagram illustrating the schedule when the start of boiling by second water heater 11b is delayed.

In FIG. 3, the period from t0, which indicates time, to t1, which indicates a boiling start time, corresponds to the first time slot, and the period from t1 on corresponds to the second time slot. In step S30, determiner 130 determines whether the demand power will exceed the reference power if the plurality of water heaters start boiling at t1, which is the time at which the second time slot starts. The "demand power" is the sum of all the power used by the plurality of water heaters, the plurality of electrical equipment 12, and electrical equipment 21 in housing complex 40. The power used (consumed power) for the boiling by the water heaters is proportional to the first boiling amount of the water heaters. As the first boiling amount decreases, the time required for boiling by the water heater decreases as well. For example, in the schedule illustrated in (a) of FIG. 3, the demand power is higher than the reference power, and determiner 130 therefore determines that the demand power will exceed the reference power.

In such a case, determiner 130 determines a schedule that delays the start of boiling by second water heater 11b, among first water heater 11a and second water heater 11b, which has a lower first boiling amount than first water heater 11a (i.e., the schedule illustrated in (b) of FIG. 3).

Although (b) of FIG. 3 illustrates a schedule that delays the start of boiling by one second water heater 11b, the schedule is not limited thereto. For example, if a plurality of water heaters for which the first boiling amount is lower than that of first water heater 11a (i.e., corresponding to second water heater 11b), a schedule that delays the start of boiling by the plurality of water heaters that have a lower first boiling amount than first water heater 11a may be determined. A schedule that delays the start of boiling more for water heaters, among the plurality of water heaters installed in housing complex 40, that have lower first boiling amounts, and which also ensures the demand power will not exceed the reference power, may also be determined. In other words, in this case, the boiling start time is later for water heaters having lower first boiling amounts. To put this differently, the boiling start time is earlier for water heaters having higher first boiling amounts.

Note that step S30 and step S40 correspond to a step of determining.

However, if determiner 130 determines that the demand power will not exceed the reference power (No in S30), determiner 130 determines the following schedule prior to the second time slot, i.e., the first time slot, in this instance. Determiner 130 determines a schedule that starts the boiling by the plurality of water heaters simultaneously (step S40a).

Furthermore, controller 140 controls the boiling by the plurality of water heaters in the second time slot based on the schedule determined by determiner 130 in step S40 or S40a (S90). More specifically, controller 140 controls communicator 110 to output, to each of the plurality of control devices 13, a control signal instructing the plurality of water heaters to boil as indicated by the determined schedule. As a result, each of the plurality of control devices 13 controls a corresponding one of the plurality of water heaters based on control signals obtained from communicator 110. For example, control device 13 of first individual dwelling 10a causes first water heater 11a to boil using time t1 indicated in (b) of FIG. 3 as the boiling start time of first water heater 11a. Additionally, for example, control device 13 of second individual dwelling 10b causes second water heater 11b to boil using a time later than time t1 indicated in (b) of FIG. 3 as the boiling start time of second water heater 11b. Note that step S90 corresponds to a step of controlling.

In this manner, if determiner 130 determines that the demand power will exceed the reference power in the first time slot (Yes in S30), determiner 130 determines the following schedule (S40). Determiner 130 determines a schedule that delays the start of boiling by second water heater 11b, which has a lower first boiling amount than first water heater 11a.

In Operation Example 1, delaying the start of boiling by second water heater 11b, which has a low first boiling amount, realizes hot water supply system 100, which is capable of suppressing the demand power (and more specifically, the maximum value of the demand power) of housing complex 40 as a whole. For example, as indicated in (b) of FIG. 3, situations where the maximum value of the demand power exceeds the reference power are suppressed. This makes it less likely that the electricity rate for housing complex 40 will rise.

Furthermore, the first boiling amount is the amount of hot water to be stored in each of the storage tanks of the plurality of water heaters during the second time slot, when the electricity rate is lower, and as the first boiling amount decreases, the time required for boiling by the water heaters decreases as well. In other words, the boiling time of the water heater having a low first boiling amount (here, second water heater 11b) is short, and thus second water heater 11b tends to finish boiling during the second time slot, when the electricity rate is lower, even if the boiling start time thereof is delayed. In other words, it is easy for the plurality of water heaters, including second water heater 11b, to finish boiling during the second time slot, when the usage amount and usage frequency of hot water is lower, and it is less likely that no hot water will remain in each of the plurality of water heaters (i.e., that the hot water will run out).

[Operation Example 2]

FIG. 4 is a flowchart of Operation Example 2 according to the present embodiment.

Operation Example 2, illustrated in FIG. 4, will describe an example in which the schedule is updated after the schedule is determined in Step S40 of Operation Example 1.

As illustrated in FIG. 4, steps S41, S42, and S43 are processing performed in the first time slot, and steps S110 and S90 are processing performed in the second time slot.

In Operation Example 2, first, step S40 described in Operation Example 1 is performed, and the schedule is determined.

Next, obtainer 120 obtains first information indicating the usage state of the hot water at the time the schedule was determined, or a second expected usage amount of the hot water in the second time slot, by second water heater 11b, for which the start of boiling has been delayed by the schedule determined by determiner 130 (S41). The first information and the second expected usage amount will be described below.

The first information is information indicating the usage state of hot water at the point in time when the schedule of second water heater 11b, for which the start of boiling is delayed by the determined schedule (i.e., the point in time of step S40), was determined. In other words, the first information can be said to be the usage state of hot water by second water heater 11b in the first time slot.

For example, after it is determined, in step S40, to delay the start of boiling by second water heater 11b, communicator 110 obtains the first information indicating the usage state of hot water by second water heater 11b from control device 13 of second individual dwelling 10b. This first information indicates the remaining hot water amount in second water heater 11b and the extent of the decrease in the remaining hot water amount. Obtainer 120 then obtains the first information obtained by communicator 110.

The second expected usage amount is the expected usage amount (expected consumption amount) of hot water, in the second time slot, for second water heater 11b, for which the start of boiling has been delayed by the determined schedule. For example, during the first time slot on a given day when Operation Example 2 is underway, control device 13 of second individual dwelling 10b predicts and determines the second expected usage amount in the second time slot starting from 11 PM on that day, based on the usage amount of hot water by second water heater 11b previous to that day. In this case, as the second expected usage amount for second water heater 11b on that day, control device 13 determines an average value of the usage amount of hot water by second water heater 11b in the second time slot over a past predetermined period (e.g., a period of one week in the past from the previous day). In other words, the second expected usage amount is the expected value for the amount of hot water used in the second time slot.

For example, after it is determined, in step S40, to delay the start of boiling by second water heater 11b, communicator 110 obtains the second expected usage amount from control device 13 of second individual dwelling 10b. Obtainer 120 then obtains the second expected usage amount obtained by communicator 110.

Next, determiner 130 determines whether second water heater 11b will run out of hot water based on the first information obtained by obtainer 120 or the second expected usage amount (S42).

For example, determiner 130 determines whether the hot water will run out by the boiling start time of second water heater 11b indicated in the schedule determined in step S40, based on the remaining hot water amount in second water heater 11b and the extent of the decrease in the remaining hot water amount indicated by the first information.

Determiner 130 may determine whether the hot water will run out by the boiling start time of second water heater 11b indicated in the schedule determined in step S40, based on the remaining hot water amount in the storage tank obtained in step S10 and the obtained second expected usage amount. For example, if the remaining hot water amount in the storage tank is less than the second expected usage amount, it may be determined that the hot water will run out.

If determiner 130 determines that second water heater 11b will run out of hot water based on the first information obtained by obtainer 120 or the second expected usage amount (Yes in S42), the following processing is performed. In this case, determiner 130 updates the schedule that had been determined in step S40 to expedite the start of boiling by second water heater 11b (S43). More specifically, determiner 130 updates the schedule to cause second water heater 11b to start boiling before the hot water runs out.

Furthermore, controller 140 controls the boiling by the plurality of water heaters in the second time slot based on the schedule updated by determiner 130 in step S43 (S110).

Note that if determiner 130 determines that second water heater 11b will not run out of hot water based on the first information obtained by obtainer 120 or the second expected usage amount (No in S42), controller 140 performs the following processing. In this case, controller 140 controls the boiling by the plurality of water heaters in the second time slot based on the schedule determined by determiner 130 in step S40 (S90).

In Operation Example 2, if it is determined that second water heater 11b, for which boiling was delayed in the schedule determined in step S40, will run out of hot water in the second time slot, the schedule is updated. More specifically, determiner 130 updates the schedule to cause second water heater 11b to start boiling before the hot water runs out. This suppresses the occurrence of situations where second water heater 11b runs out of hot water.

[Operation Example 3]

FIG. 5 is a flowchart of Operation Example 3 according to the present embodiment.

Operation Example 3, illustrated in FIG. 5, will describe an example in which the schedule is updated after the schedule is determined in Step S40 of Operation Example 1.

As illustrated in FIG. 5, steps S45, S46, and S47 are processing performed in the first time slot, and steps S110 and S90 are processing performed in the second time slot.

In Operation Example 3, first, step S40 described in Operation Example 1 is performed, and the schedule is determined.

Obtainer 120 obtains second information indicating a third expected usage amount of hot water by each of the plurality of water heaters in each of time periods (S45). The second information will be described hereinafter.

The second information pertaining to third water heater 11c will be described here.

Based on a usage history of hot water for third water heater 11c, control device 13 of third individual dwelling 10c determines a predetermined time period and the third expected usage amount of hot water at the predetermined time period. Table 1 is an example of the second information indicating the third expected usage amount of hot water for each of times.

[Table 1]

| Time | | Third expected usage amount (L) |
| --- | --- | --- |
| Start time | End time | |
| 12 AM | 1 AM | 0 |
| 1 AM | 2 AM | 0 |
| 2 AM | 3 AM | 0 |
| 3 AM | 4 AM | 0 |

(continued)

| Time | | Third expected usage amount (L) |
| --- | --- | --- |
| Start time | End time | |
| 4 AM | 5 AM | 0 |
| 5 AM | 6 AM | 0 |
| 6 AM | 7 AM | 20 |
| 7 AM | 8 AM | 20 |
| 8 AM | 9 AM | 20 |
| 9 AM | 10 AM | 0 |
| 10 AM | 11 AM | 0 |
| 11 AM | 12 PM | 0 |
| 12 PM | 1 PM | 0 |
| 1 PM | 2 PM | 0 |
| 2 PM | 3 PM | 0 |
| 3 PM | 4 PM | 0 |
| 4 PM | 5 PM | 20 |
| 5 PM | 6 PM | 20 |
| 6 PM | 7 PM | 200 |
| 7 PM | 8 PM | 50 |
| 8 PM | 9 PM | 20 |
| 9 PM | 10 PM | 10 |
| 10 PM | 11 PM | 0 |
| 11 PM | 12 AM | 0 |

"Each of times" is, for example, every hour, and in Table 1, this is from 6 AM to 7 AM, for example. 20 L, which is amount of hot water expected to be used from 6 AM to 7 AM (the expected consumption amount), corresponds to the third expected usage amount. As an example, the average value of the usage amount of hot water used by second water heater 11b for each time in a predetermined period (e.g., the period to one week in the past from that day) may be used as the third expected usage amount for each time. The second information is the same information for each of the plurality of water heaters aside from third water heater 11c.

Control device 13 outputs this second information to communicator 110, and obtainer 120 then obtains the second information obtained by communicator 110.

Next, based on the schedule determined in step S40 and the obtained second information, determiner 130 determines whether third water heater 11c for which the time from the planned end time of the boiling to the planned usage time of the hot water exceeds a reference time is present among the plurality of water heaters (S46).

For example, assume that the planned end time of boiling by third water heater 11c is 2 AM in the schedule determined in step S40. As indicated in Table 1, for third water heater 11c, hot water is expected to be used from 6 AM. In this case, the time from 2 AM, which is the planned end time of the boiling, to 6 AM, which is the planned usage time of the hot water, is four hours. If, for example, the reference time is three hours, third water heater 11c is a water heater in which the time from the planned end time of the boiling to the planned usage time of the hot water (four hours) exceeds the reference time (three hours).

In other words, in this case, determiner 130 determines that third water heater 11c, which is a water heater for which the time from the planned end time of the boiling to the planned usage time of the hot water exceeds the reference time, is present among the plurality of water heaters. Note that the reference time is not limited to the foregoing, and is, for example, at least one hour and at most eight hours.

If third water heater 11c for which the time from the planned end time of the boiling to the planned usage time of the hot water exceeds the reference time is present (Yes in S46), determiner 130 updates the schedule as follows. In this case, determiner 130 updates the schedule determined in step S40 such that in the second time slot, after boiling, third water heater 11c stops temporarily and then starts boiling again (S47). For example, the schedule is updated such that after boiling from 12 AM to 1 AM, the boiling by third water heater 11c is stopped temporarily, and third water heater 11c then boils again from 4 AM to 5 AM.

Furthermore, controller 140 controls the boiling by the plurality of water heaters in the second time slot based on the schedule updated by determiner 130 in step S47 (S110).

Note that if determiner 130 determines that third water heater 11c for which the time from the planned end time of the boiling to the planned usage time of the hot water exceeds the reference time is not present (No in S46), controller 140 performs the following processing. In this case, controller 140 controls the boiling by the plurality of water heaters in the second time slot based on the schedule determined by determiner 130 in step S40 (S90).

In Operation Example 3, if third water heater 11c for which the time from the planned end time of the boiling to the planned usage time of the hot water exceeds the reference time is present in the schedule determined in step S40, the schedule is updated. More specifically, determiner 130 updates the schedule such that in the second time slot, after boiling, third water heater 11c stops temporarily and then starts boiling again. Accordingly, situations where the temperature of the stored hot water drops in third water heater 11c due to the time from the planned end time of the boiling to the planned usage time of the hot water being prolonged are suppressed. In other words, situations where the temperature of the stored hot water drops in third water heater 11c are suppressed by determining a schedule that shortens the time from the planned end time of the boiling to the planned usage time of the hot water.


[Operation Example 4]

FIG. 6 is a flowchart of Operation Example 4 according to the present embodiment.

Operation Example 4, illustrated in FIG. 6, will describe an example in which the schedule is updated during the second time slot after the boiling in step S90 of Operation Example 1 is performed a plurality of times.

As illustrated in FIG. 6, steps S91, S92, and S110 are processing performed in the second time slot.

In Operation Example 4, first, step S90 described in Operation Example 1 is performed, and the boiling by the plurality of water heaters is controlled.

Obtainer 120 obtains the first used power, at the present time, of the electrical equipment in housing complex 40 aside from the plurality of water heaters in the second time slot, after the schedule is determined in step S40 (step S91). Note that obtainer 120 obtains the first used power as follows.

In step S91, obtainer 120 obtains, through communicator 110, the individual dwelling power information pertaining to the power used by electrical equipment 12 and common area power information pertaining to the power used by electrical equipment 21. As described above, in the present embodiment, the electrical equipment aside from the plurality of water heaters is constituted by all of the plurality of electrical equipment 12 in the plurality of households and electrical equipment 21 in common area 20. The first used power is information that integrates the used power at the present time (the second time slot) for electrical equipment 12, indicated by the individual dwelling power information, and the used power at the present time (the second time slot) for electrical equipment 21, indicated by the common area power information.

In other words, by obtaining the individual dwelling power information and the common area power information, obtainer 120 obtains the first used power, at the present time, of the electrical equipment aside from the plurality of water heaters in housing complex 40 in the second time slot. The first used power can also be said to be a measured value of the power of the electrical equipment aside from the plurality of water heaters at the present time (the second time slot).

Next, determiner 130 updates the schedule as follows based on the plurality of first boiling amounts obtained in step S10 and the first used power obtained in step S91 (S92). Determiner 130 updates the schedule such that the demand power of housing complex 40 as a whole does not exceed the obtained reference power and the boiling is also performed in order from the water heater, among the plurality of water heaters, having the highest first boiling amount. Step S92 will be described in more detail with reference to FIG. 7.

FIG. 7 is a diagram illustrating updating of the schedule through step S92 in Operation Example 4 according to the present embodiment. More specifically, (a) of FIG. 7 is a diagram illustrating the schedule determined in step S40, and (b) of FIG. 7 is a diagram illustrating the schedule updated in step S92.

As described above, in step S30 of Operation Example 1, determiner 130 determines whether the demand power of housing complex 40 as a whole will exceed the obtained reference power based on the second used power corresponding to the expected power amount, in the second time slot, of the electrical equipment aside from the plurality of water heaters. On the other hand, in step S92 of Operation Example 4, the schedule is reviewed based on the first used power corresponding to the measured value for the power of the electrical equipment aside from the plurality of water heaters. For example, as illustrated in FIG. 7, determiner 130 updates the schedule such that, when the first used power (the measured value) is lower than the second used power (the predicted value), the demand power will not exceed the reference power, and the boiling is also performed in order from the water heater, among the plurality of water heaters, having the highest first boiling amount. More specifically, at the point in time of step S92 (time t11 in (b) of FIG. 7), determiner 130 updates the schedule such that of the plurality of water heaters that are not yet boiling, the water heaters boil in order from the water heater having the highest first boiling amount.

For example, in the example in FIG. 7, the water heater having the highest first boiling amount among the plurality of water heaters is second water heater 11b. Although a schedule that delays the start of boiling by second water heater 11b was determined in step S40, in step S92, the schedule is updated such that the boiling by second water heater 11b is expedited.

Furthermore, controller 140 controls the boiling by the plurality of water heaters in the second time slot based on the schedule updated by determiner 130 in step S92 (S110).

In Operation Example 4, in the second time slot, if the demand power is lower than the reference power, i.e., if excess power is available, the schedule is updated to increase the number of water heaters that boil. This makes it more likely that the boiling will end during the second time slot, when the electricity rate is lower. In particular, determiner 130 updating the schedule such that the boiling is performed in order from the water heater having the highest first boiling amount among the plurality of water heaters makes it more likely that the boiling will end during the second time slot, when the electricity rate is lower.

[Operation Example 5]

FIG. 8 is a flowchart of Operation Example 5 according to the present embodiment.

Operation Example 5, illustrated in FIG. 8, will describe an example in which the schedule is updated after the schedule is determined in Step S40 of Operation Example 1.

As illustrated in FIG. 8, steps S50 and S51 are processing performed in the first time slot, and steps S110 and S90 are processing performed in the second time slot.

In Operation Example 5, first, step S40 described in Operation Example 1 is performed, and the schedule is determined.

Next, if the planned end time of the boiling by second water heater 11b, for which the start of boiling was delayed in the schedule determined in step S40, falls within the first time slot, determiner 130 determines whether a second price increase is lower than a first price increase (S50). As described above, the second time slot is from 11 PM to 7 AM the next day. In other words, the planned end time of the boiling by second water heater 11b falling within the first time slot means that the planned end time falls within the first time slot of the next day (from 7 AM on the next day to 11 PM on the next day).

The first price increase and the second price increase will be described here with reference to FIG. 9.

FIG. 9 is a diagram illustrating a schedule updated through the processing of Operation Example 5 according to the present embodiment. More specifically, (a) of FIG. 9 is a diagram illustrating a schedule in which the planned end time of the boiling by second water heater 11b, for which the start of the boiling has been delayed, falls within the first time slot, and (b) of FIG. 9 is a diagram illustrating a schedule when demand power Pb exceeds reference power Pa. In FIG. 9, the period from t0, which indicates time, to t1, which indicates the boiling start time, corresponds to the first time slot; the period from t1 to t2 corresponds to the second time slot; and the period from t2 on corresponds to the first time slot. In other words, t1, which indicates time, is 11 PM, and t2, which indicates time, is 7 AM.

The first price increase will be described with reference to (a) of FIG. 9.

As described above, the first time slot is a time slot in which the electricity rate is higher, and the second time slot is a time slot in which the electricity rate is lower.

As indicated in (a) of FIG. 9, if the planned end time of the boiling by second water heater 11b falls within the first time slot, the electricity rate paid by the owner of second water heater 11b will be higher than if the boiling by second water heater 11b ends in the second time slot. The first price increase is an increase in the electricity rate due to the planned end time of the boiling by second water heater 11b falling within the first time slot, compared to the electricity rate when the planned end time falls within the second time slot.

For example, assume that the unit price of electricity in the second time slot is A (yen/kWh), the unit price of electricity in the first time slot is B (yen/kWh), and the amount of power required by second water heater 11b to boil within first time t, indicated in (a) of FIG. 9, is W (kWh). In this case, the first price increase is expressed by Formula (1).

$$W \times (B - A) \quad \text{(Formula 1)}$$

The second price increase will be described next with reference to (b) of FIG. 9.

As indicated in (b) of FIG. 9, the second price increase is an increase in the electricity rate caused by the demand power (Pb) exceeding the reference power (Pa) when second water heater 11b boils such that the planned end time of the boiling by second water heater 11b falls within the second time slot.

For example, assuming the demand power is Pb (kWh), the reference power is Pa (kWh), and the unit price of electricity in the second time slot is A (yen/kWh), the second price increase for the boiling by second water heater 11b, indicated in (b) of FIG. 9, is expressed by Formula (2).

$$A \times (Pb - Pa) \times 365 \text{ (Formula 2)}$$

Note that as described above, if the demand power (Pb) exceeds the reference power (Pa), a contract in which the reference power is increased and the electricity rate is raised will be required for the next fiscal year. In other words, if the demand power (Pb) exceeds the reference power (Pa), a contract with a higher electricity rate will be required throughout the year, and Formula (2) therefore includes "× 365" to indicate the year.

As illustrated in FIG. 8, when the second price increase is lower than the first price increase (Yes in S50), determiner 130 increases the reference power, and updates the schedule such that the planned end time of the boiling by second water heater 11b falls within the second time slot (S51). In other words, in this case, as illustrated in FIG. 9, determiner 130 changes the reference power such that the reference power increases from the reference power (Pa) to a post-change reference power (Pc) and the demand power (Pb) becomes lower than the post-change reference power (Pc). As a result, determiner 130 updates the schedule to the schedule indicated in (b) of FIG. 9.

Furthermore, controller 140 controls the boiling by the plurality of water heaters in the second time slot based on the schedule updated by determiner 130 in step S51 (S110).

Note that if the second price increase is at least the first price increase (No in S50), controller 140 performs the following processing. In this case, controller 140 controls the boiling by the plurality of water heaters in the second time slot based on the schedule determined by determiner 130 in step S40 (S90).

In Operation Example 5, by comparing the first price increase with the second price increase, hot water supply system 100 can update the schedule such that the electricity rate is lower throughout the year.

In addition, the following processing may be performed, taking into account the first price increase and the second price increase.

If a schedule is determined that delays the start of the boiling by second water heater 11b in step S40, the electricity rate for the boiling by second water heater 11b may increase, as described in Operation Example 5. In this case, it is necessary for the owner of second water heater 11b to pay the increased electricity rate. However, the owner of first water heater 11a, for example, can still pay the electricity rate that has not been increased, and thus the owner of second water heater 11b may feel that the situation is unfair. Accordingly, determiner 130 performs the following processing.

If the planned end time of the boiling by second water heater 11b, which was delayed in the schedule determined in step S40, falls within the first time slot, determiner 130 calculates and outputs a refund amount to the owner of second water heater 11b.

As the refund amount, determiner 130 calculates a first refund amount, which is the first price increase, or a second refund amount, which is the sum of the first price increase and the second price increase multiplied by a predetermined percentage.

Determiner 130 outputs the first refund amount or the second refund amount, which are the calculated refund amounts, to communicator 110, after which communicator 110 outputs the output refund amount to an electronic communication device (e.g., a smartphone or the like) owned by a manager of housing complex 40.

The electronic communication device displays the obtained refund amount on a display or the like of the electronic communication device. As a result, for example, the manager will see the displayed refund amount, and will refund the refund amount to the owner of second water heater 11b.

Performing such processing of calculating the refund amount ensures the owner of second water heater 11b, for which the start of boiling was delayed in the schedule determined in step S40, is less likely to feel that the situation is unfair.

Furthermore, the following processing may be performed when determiner 130 calculates and outputs the refund amount to the owner of second water heater 11b as described above.

It is preferable that before determiner 130 calculates and outputs the refund amount, obtainer 120 has obtained a refund instruction, which is an instruction from the respective owners of the plurality of water heaters. Although a refund instruction that is an instruction from the owner of second water heater 11b will be described here, it is preferable that obtainer 120 has obtained a refund instruction from the respective owners of the plurality of water heaters aside from second water heater 11b in the same manner.

The refund instruction indicates that the first refund amount has been selected as the stated refund amount; or, that the second refund amount has been selected as the stated refund amount, and the numerical value of the predetermined percentage mentioned above. In other words, the owner of second water heater 11b can select their desired refund amount. In addition, if the owner selects the second refund amount as the refund amount, the refund instruction includes a numerical value indicating the predetermined percentage multiplied by the sum of the first price increase and the second price increase.

For example, the acceptor of control device 13 of second individual dwelling 10b accepts the refund instruction from the owner of second water heater 11b. Control device 13 of second individual dwelling 10b outputs the refund instruction accepted by the acceptor to communicator 110. Furthermore, obtainer 120 obtains the refund instruction from communicator 110.

Determiner 130 calculates and outputs the refund amount based on the obtained refund instruction. For example, if the obtained refund instruction indicates that the first refund amount has been selected as the refund amount, determiner 130 determines and calculates the first refund amount as the refund amount to the owner of second water heater 11b. Additionally, for example, if the obtained refund instruction indicates that the second refund amount has been selected as the refund amount and indicates a numerical value for the predetermined percentage, determiner 130 determines and calculates the second refund amount as the refund amount to the owner of second water heater 11b.

Performing such processing of calculating the refund amount ensures the owner of second water heater 11b, for which the start of boiling was delayed in the schedule determined in step S40, is even less likely to feel that the situation is unfair.

Variation 1 on Operation Example 5, which is an example of operations in which the refund amount calculated determiner 130 is used, will be described with reference to FIG. 10.

FIG. 10 is a flowchart of Variation 1 on Operation Example 5 according to the present embodiment. In the present variation, the processing of step S50a is performed instead of step S50 of Operation Example 5 illustrated in FIG. 8.

First, step S40 described in Operation Example 1 is performed, and the schedule is determined.

Next, if the planned end time of the boiling by second water heater 11b, for which the start of boiling was delayed in the schedule determined in step S40, falls within the first time slot, determiner 130 determines whether the second price increase is lower than the sum of the first price increase and the refund amount (S50a).

Furthermore, if a determination of Yes is made in step S50a, the processing of step S51 is performed, whereas if a determination of No is made in step S50a, the processing of step S90 is performed.

In Variation 1 on Operation Example 5, by comparing the sum of first price increase and the refund amount with the second price increase, hot water supply system 100 can update the schedule such that the electricity rate is even lower throughout the year.

Furthermore, Variation 2 on Operation Example 5, in which a plurality of second water heaters 11b are provided and a single second water heater 11b for which the start of boiling is delated based on the refund amount is determined, will be described with reference to FIGS. 11 and 12.

FIG. 11 is a diagram illustrating a schedule when a plurality of second water heaters 11b are provided, according to the present embodiment.

FIG. 12 is a flowchart of Variation 2 on Operation Example 5 according to the present embodiment. In the present variation, the processing of steps S52 and S53 is performed instead of steps S50 and S51 of Operation Example 5 illustrated in FIG. 8.

In Variation 2 on Operation Example 5, a plurality of second water heaters 11b are provided. Here, two second water heaters 11b are provided, which may be referred to as second water heater (A) 11b and second water heater (B) 11b for identification purposes. The two second water heaters 11b are water heaters installed in different individual dwellings, and are water heaters having a lower first boiling amount than first water heater 11a.

In this manner, when a plurality of second water heaters 11b, which have a lower first boiling amount than first water heater 11a, are provided, determiner 130 updates the schedule as follows.

Variation 2 on Operation Example 5 will be described further with reference to FIG. 12.

First, step S40 described in Operation Example 1 is performed, and the schedule is determined.

It is preferable that before step S40 is performed, obtainer 120 has obtained a refund instruction, which is an instruction from each of the owners of the plurality of water heaters (and more specifically, the plurality of second water heaters 11b).

Next, determiner 130 determines whether the planned end time of boiling by at least one of second water heaters 11b falls within the first time slot in the schedule determined in step S40 (S52). As described above, the second time slot is from 11 PM to 7 AM the next day. In other words, the planned end time of the boiling by at least one second water heater 11b falling within the first time slot means that the planned end time falls within the first time slot of the next day (from 7 AM on the next day to 11 PM on the next day).

If the planned end time of the boiling by at least one second water heater 11b falls within the first time slot (Yes in S52), determiner 130 updates the schedule as follows (S53). In this case, determiner 130 calculates a refund amount for each of the plurality of owners based on the plurality of refund instructions obtained, and updates the schedule to delay the start of boiling by second water heater 11b owned by the owner receiving the lowest refund amount among the plurality of calculated refund amounts. As illustrated in FIG. 11, if two second water heaters 11b are provided, refund amounts for the respective owners of the two second water heaters 11b are calculated.

For example, (a) of FIG. 11 illustrates an example in which the refund amount to the owner of second water heater (A) 11b is lower than the refund amount to the owner of second water heater (B) 11b, i.e., the owner having the lowest refund amount is the owner of second water heater (A) 11b. In this case, determiner 130 updates the schedule to delay the start of boiling by second water heater (A) 11b, which is owned by the owner having the lowest refund amount.

Additionally, for example, (b) of FIG. 11 illustrates an example in which the refund amount to the owner of second water heater (A) 11b is greater than the refund amount to the owner of second water heater (B) 11b, i.e., the owner having the lowest refund amount is the owner of second water heater (B) 11b. In this case, determiner 130 updates the schedule to delay the start of boiling by second water heater (B) 11b, which is owned by the owner having the lowest refund amount.

Furthermore, controller 140 controls the boiling by the plurality of water heaters in the second time slot based on the schedule updated by determiner 130 in step S53 (S110).

Note that if the planned end time of the boiling by at least one second water heater 11b does not fall within the first time slot (No in S52), controller 140 performs the following processing. In this case, controller 140 controls the boiling by the plurality of water heaters in the second time slot based on the schedule determined by determiner 130 in step S40 (S90).

In Variation 2 on Operation Example 5, determiner 130 may suppress the refund amount paid by the manager of housing complex 40 by updating the schedule to delay the start of boiling by second water heater 11b owned by the owner having the lowest refund amount.

In Variation 2 on Operation Example 5, in step S52, determiner 130 determines whether the planned end time of the boiling by at least one second water heater 11b falls within the first time slot. However, the configuration is not limited thereto. At this time, determiner 130 may perform the same processing when all of the planned end times of the plurality of second water heaters 11b fall within the first time slot.

[Operation Example 6]

FIG. 13 is a flowchart of Operation Example 6 according to the present embodiment.

Operation Example 6, illustrated in FIG. 13, will describe an example in which the schedule is updated during the second time slot after the boiling in step S90 of Operation Example 1 is performed a plurality of times.

As illustrated in FIG. 13, steps S95, S96, S97, S110, and S120 are processing performed in the second time slot.

In Operation Example 6, first, step S90 described in Operation Example 1 is performed, and the boiling by the plurality of water heaters is controlled.

Obtainer 120 obtains, in the second time slot, a boiling instruction for fourth water heater 11d included in the plurality of water heaters, from the owner of fourth water heater 11d (S95). Note that obtainer 120 obtains the boiling instruction as follows.

Although a boiling instruction that is an instruction from the owner of fourth water heater 11d will be described first, obtainer 120 may also obtain a boiling instruction from the respective owners of the plurality of water heaters aside from fourth water heater 11d in the same manner.

The boiling instruction is an instruction for boiling in the storage tank of fourth water heater 11d and storing the hot water. For example, the acceptor of control device 13 of fourth individual dwelling 10d accepts the boiling instruction from the owner of fourth water heater 11d. For example, upon noticing that the remaining hot water amount in the storage tank is low, and when hot water is needed, the owner of fourth water heater 11d inputs the boiling instruction by operating the acceptor. Control device 13 of fourth individual dwelling 10d outputs the boiling instruction accepted by the acceptor to communicator 110. Furthermore, obtainer 120 obtains the boiling instruction from communicator 110.

Next, based on the boiling instruction obtained by obtainer 120, determiner 130 determines whether the demand power of housing complex 40 as a whole will exceed the obtained reference power if fourth water heater 11d starts boiling (S96). More specifically, determiner 130 determines whether the demand power will exceed the reference power if fourth water heater 11d starts boiling immediately after the boiling instruction is obtained.

As described above, step S96 is processing performed in the second time slot, and in the second time slot, boiling by the plurality of water heaters is performed as illustrated in FIG. 3 and the like. More specifically, in the second time slot, fourth water heater 11d is not yet boiling. There is thus a risk that the demand power will exceed the reference power if fourth water heater 11d also starts boiling in addition to the plurality of water heaters that are already boiling.

However, obtainer 120 obtaining the boiling instruction corresponds to a situation where the owner of fourth water heater 11d needs hot water. A problem therefore arises in that the owner of fourth water heater 11d will be dissatisfied if fourth water heater 11d does not boil immediately after obtaining the boiling instruction.

Accordingly, if it is determined that the demand power will exceed the reference power if fourth water heater 11d starts boiling (Yes in S96), determiner 130 updates the schedule as follows (S97). Determiner 130 updates the schedule to stop boiling by the water heaters currently boiling among the plurality of water heaters, and start the boiling by fourth water heater 11d. In other words, in this case, determiner 130 updates the schedule to stop boiling by the water heaters boiling at the point in time when the boiling instruction was obtained, and start the boiling by fourth water heater 11d instead. In other words, the boiling by fourth water heater 11d is performed between boiling by other water heaters among the plurality of water heaters, and the order of the boiling by the plurality of water heaters is shifted earlier or later.

Note that if it is determined that the demand power will not exceed the reference power even if fourth water heater 11d starts boiling (No in S96), determiner 130 updates the schedule as follows (S120). Determiner 130 updates the schedule to continue the boiling by the plurality of water heaters and also start the boiling by fourth water heater 11d. In other words, in this case, determiner 130 updates the schedule such that the boiling by the water heaters boiling at the point in time when the boiling instruction was obtained and the boiling by fourth water heater 11d are performed simultaneously.

Furthermore, controller 140 controls the boiling by the plurality of water heaters in the second time slot based on the schedule updated by determiner 130 in step S97 and step S120 (S110).

In Operation Example 6, the occurrence of a problem where the owner of fourth water heater 11d is dissatisfied can be suppressed even if obtainer 120 obtains the boiling instruction for fourth water heater 11d from the owner of fourth water heater 11d in the second time slot.

[Operation Example 7]

FIG. 14 is a flowchart of Operation Example 7 according to the present embodiment.

Operation Example 7, illustrated in FIG. 14, will describe an example in which the schedule is updated, in the first time slot, based on a second used power, the second used power being based on an expected usage amount of electrical equipment aside from the plurality of water heaters in the second time slot.

As illustrated in FIG. 14, steps S21, S30, S40, S40a, S55, and S56 are processing performed in the first time slot, and steps S110 and S90 are processing performed in the second time slot.

In Operation Example 7, first, step S20 described in Operation Example 1 is performed.

Next, prior to the second time slot, i.e., in the first time slot, obtainer 120 obtains the second used power based on the expected usage amount, in the second time slot, by the electrical equipment aside from the plurality of water heaters in housing complex 40 (S21).

In step S21, obtainer 120 obtains the individual dwelling power information pertaining to the power used by electrical equipment 12 and the common area power information pertaining to the power used by electrical equipment 21. Note that this processing has also been described in Operation Example 1. In the present embodiment, the electrical equipment aside from the plurality of water heaters is constituted by all of the plurality of electrical equipment 12 in the plurality of households and electrical equipment 21 in common area 20. For this reason, the "second used power" is information that integrates the expected used power, in the second time slot, for electrical equipment 12 indicated by the individual dwelling power information, and the expected used power, in the second time slot, for electrical equipment 21 indicated by the common area power information.

Note that the second used power corresponds to the expected power amount, in the second time slot, of the electrical equipment aside from the plurality of water heaters in housing complex 40.

Furthermore, steps S30, S40, and S40a described in Operation Example 1 are performed.

Next, based on the plurality of first boiling amounts obtained and the second used power obtained, determiner 130 determines whether, in the second time slot, the demand power of housing complex 40 as a whole will exceed the reference power obtained (S55). In other words, in step S55, it is determined whether the demand power will still exceed the reference power even if the start of boiling by second water heater 11b is delayed in step S40. In other words, prior to the start of the second time slot (in step S55), determiner 130 determines whether the demand power will exceed the reference power based on the second used power corresponding to the expected power amount in the second time slot.

Furthermore, if it is determined that the demand power will exceed the reference power in the second time slot (Yes in step S55), determiner 130 updates the schedule to stop the boiling by the plurality of water heaters (S56).

The processing of step S56 will be described with reference to FIG. 15.

FIG. 15 is a diagram illustrating a schedule when it is determined that the demand power will exceed the reference power in step S55 of Operation Example 7 according to the present embodiment. (a) of FIG. 15 is a diagram illustrating a schedule when it is determined that the demand power will exceed the reference power. For example, as illustrated in (a) of FIG. 15, if the second used power for the electrical equipment aside from the plurality of water heaters increases over time, the demand power will exceed the reference power in the second time slot. In such a case, determiner 130 updates the schedule to stop the boiling by the plurality of water heaters. (b) of FIG. 15 is a diagram illustrating a schedule in which the boiling by one water heater is stopped partway through. Note that the present embodiment is not limited to the example indicated in (b) of FIG. 15, and the boiling by the plurality of water heaters is stopped partway through. Determiner 130 preferably updates the schedule to start boiling at t1 and stop boiling at t3, for example, as indicated in (b) of FIG. 15. Note that if there is a time slot in which the second used power decreases after t3, it is preferable to start the boiling by the water heater again.

Furthermore, controller 140 controls the boiling by the plurality of water heaters in the second time slot based on the schedule updated by determiner 130 in step S56 (S110).

Note that if it is determined that the demand power will not exceed the reference power in the second time slot (No in S55), controller 140 performs the following processing. In this case, controller 140 controls the boiling by the plurality of water heaters in the second time slot based on the schedule determined by determiner 130 in step S40 (S90). Additionally, if step S40a has been performed, controller 140 controls the boiling by the plurality of water heaters in the second time slot based on the schedule determined by determiner 130 in step S40a (S90).

In Operation Example 7, prior to the start of the second time slot (in step S55), determiner 130 determines whether the demand power will exceed the reference power based on the second used power corresponding to the expected power amount in the second time slot. By hot water supply system 100 stopping the boiling by the water heaters when the demand power will exceed the reference power, the schedule can be updated such that the demand power does not exceed the reference power. In other words, hot water supply system 100 capable of suppressing the demand power (and more specifically, the maximum value of the demand power) of housing complex 40 as a whole is realized.

[Operation Example 8]

FIG. 16 is a flowchart of Operation Example 8 according to the present embodiment.

Operation Example 8, illustrated in FIG. 16, will describe an example in which the schedule is updated, in the second time slot, based on a first used power corresponding to a measured value for electrical equipment aside from the plurality of water heaters, in the second time slot.

As illustrated in FIG. 16, steps S100, S101, S102, S110, and S90 are processing performed in the second time slot.

In Operation Example 8, first, step S90 described in Operation Example 1 is performed. Note that before step S90, step S21 of Operation Example 7 is performed, and the second used power is obtained.

After step S90, obtainer 120 obtains the first used power, at the present time, of the electrical equipment in housing complex 40 aside from the plurality of water heaters in the second time slot (step S100). Note that step S100 is the same processing as step S91 described in Operation Example 4. In other words, obtainer 120 obtains the first used power, which is a measured value of the power of the electrical equipment aside from the plurality of water heaters at the present time (the second time slot).

Furthermore, based on the plurality of first boiling amounts obtained and the first used power obtained, determiner 130 determines whether, in the second time slot, the demand power of housing complex 40 as a whole will exceed the reference power obtained (S101). In other words, in step S101, it is determined whether the demand power will still exceed the reference power even if the start of boiling by second water heater 11b is delayed in step S40. In other words, determiner 130 predicts and determines whether the demand power will exceed the reference power based on the first used power, which is the measured value of the power of the electrical equipment aside from the plurality of water heaters, after the start of the second time slot (in step S101).

Furthermore, if it is determined that the demand power will exceed the reference power in the second time slot (Yes in step S101), determiner 130 updates the schedule to stop the boiling by the plurality of water heaters (S102).

The processing of step S101 will be described with reference to FIG. 17.

FIG. 17 is a diagram illustrating a schedule when it is determined that the demand power will exceed the reference power in Operation Example 8 according to the present embodiment. (a) of FIG. 17 is a diagram illustrating a schedule when it is determined that the demand power will exceed the reference power. For example, as indicated in (a) of FIG. 17, at time t4, the first used power for the electrical equipment aside from the plurality of water heaters is obtained, and it is determined that the demand power will exceed the reference power in the second time slot (and more specifically, after time t4). In such a case, determiner 130 updates the schedule to stop the boiling by the plurality of water heaters. (b) of FIG. 17 is a diagram illustrating a schedule in which the boiling by one water heater is stopped. Note that the present embodiment is not limited to the example indicated in (b) of FIG. 17, and the boiling by the plurality of water heaters is stopped. Determiner 130 preferably updates the schedule to start boiling at t1 and stop boiling at t5, which is after t4, for example, as indicated in (b) of FIG. 17. Note that the first used power is obtained every certain period of time (e.g., every five minutes), and if there is a time slot in which the first used power decreases after t5, it is preferable to start the boiling by the water heater again.

Furthermore, controller 140 controls the boiling by the plurality of water heaters in the second time slot based on the schedule updated by determiner 130 in step S102 (S110).

Note that if it is determined that the demand power will not exceed the reference power in the second time slot (No in S101), controller 140 performs the following processing. In this case, controller 140 controls the boiling by the plurality of water heaters in the second time slot based on the schedule determined by determiner 130 in step S40 (S90).

In Operation Example 8, determiner 130 determines whether the demand power will exceed the reference power based on the first used power, which is the measured value of the power of the electrical equipment aside from the plurality of water heaters, during the first time slot (in step S101). By hot water supply system 100 stopping the boiling by the water heaters when the demand power will exceed the reference power, the schedule can be updated such that the demand power does not exceed the reference power. In other words, hot water supply system 100 capable of suppressing the demand power (and more specifically, the maximum value of the demand power) of housing complex 40 as a whole is realized.

[Operation Example 9]

FIG. 18 is a flowchart of Operation Example 9 according to the present embodiment.

Operation Example 9, illustrated in FIG. 18, will describe an example in which the schedule is updated such that power is supplied from power supply equipment 23 in the second time slot.

As illustrated in FIG. 18, steps S60 and S61 are processing performed in the first time slot, and steps S110 and S90 are processing performed in the second time slot.

In Operation Example 9, first, step S40 described in Operation Example 1 is performed, and the schedule is determined.

Next, based on the schedule determined in step S40 and the obtained reference power, determiner 130 determines whether, in the second time slot, the demand power of housing complex 40 as a whole will exceed the obtained reference power (S60). In other words, in step S60, it is predicted and determined whether the demand power will still exceed the reference power even if the start of boiling by second water heater 11b is delayed in step S40.

Furthermore, if it is determined that the demand power will exceed the reference power in the second time slot (Yes in S60), determiner 130 updates the schedule to supply power from power supply equipment 23 provided by housing complex 40 to housing complex 40 (S61).

Here, determiner 130 updates the schedule to supply power from power supply equipment 23 to housing complex 40 by the amount by which the demand power exceeds the reference power. The sum of the power supplied by the power company and the power supplied by power supply equipment 23 is equivalent to the demand power. In other words, because the power supplied by the power company is equivalent to the reference power, situations where the power supplied by the power company exceeds the reference power will be suppressed even if the demand power exceeds the reference power.

Furthermore, controller 140 controls the boiling by the plurality of water heaters in the second time slot based on the schedule updated by determiner 130 in step S61 (S110).

Note that if it is determined that the demand power will not exceed the reference power in the second time slot (No in S60), controller 140 performs the following processing. In this case, controller 140 controls the boiling by the plurality of water heaters in the second time slot based on the schedule determined by determiner 130 in step S40 (S90).

In Operation Example 9, if it is determined that the demand power will exceed the reference power, the schedule is updated such that power is supplied from power supply equipment 23 to housing complex 40. Accordingly, situations where the power supplied by the power company exceeds the reference power are suppressed. This makes it less likely that the electricity rate for housing complex 40 will rise.

[Operation Example 10]

FIG. 19 is a flowchart of Operation Example 10 according to the present embodiment.

Operation Example 10, illustrated in FIG. 19, will describe an example in which the schedule is updated such that power is supplied from power supply equipment 23 in the first time slot.

As illustrated in FIG. 19, steps S65 and S66 are processing performed in the first time slot, and steps S110 and S90 are processing performed in the second time slot.

In Operation Example 10, first, step S40 described in Operation Example 1 is performed, and the schedule is determined.

Next, determiner 130 determines whether the planned end time of boiling by second water heaters 11b for which the start of boiling was delayed in the schedule determined in step S40 falls within the first time slot (S65).

As described above, the second time slot is from 11 PM to 7 AM the next day. In other words, the planned end time of the boiling by second water heater 11b for which the start of boiling was delayed falling within the first time slot means that the planned end time falls within the first time slot of the next day (from 7 AM on the next day to 11 PM on the next day).

Furthermore, if it is determined that the planned end time of the boiling by second water heater 11b falls within the first time slot (Yes in S65), determiner 130 updates the schedule as follows (S66). In this case, determiner 130 updates the schedule to supply power from power supply equipment 23 provided by housing complex 40 for the boiling by second water heater 11b in the first time slot. Here, determiner 130 updates the schedule such that all the power required for the boiling by second water heater 11b in the first time slot is supplied from power supply equipment 23. In other words, it is not necessary for power to be supplied from the power company to housing complex 40 for the boiling by second water heater 11b in the first time slot.

Furthermore, controller 140 controls the boiling by the plurality of water heaters in the second time slot based on the schedule updated by determiner 130 in step S66 (S110).

Note that if it is determined that the planned end time of the boiling by second water heater 11b does not fall within the first time slot (No in S65), controller 140 performs the following processing. In this case, controller 140 controls the boiling by the plurality of water heaters in the second time slot based on the schedule determined by determiner 130 in step S40 (S90).

In Operation Example 10, if the planned end time of the boiling by second water heater 11b falls within the first time slot, the schedule is updated to supply power from power supply equipment 23 for the boiling. It is therefore not necessary for power to be supplied from the power company to housing complex 40 for the boiling. This makes it possible to keep the electricity rate for housing complex 40 low.

[Operation Example 11]

FIG. 20 is a flowchart of Operation Example 11 according to the present embodiment.

Operation Example 11, illustrated in FIG. 20, will describe an example in which fifth water heater 11e boils in the first time slot.

As illustrated in FIG. 20, steps S70, S71, S72, S73, and S74 are processing performed in the first time slot.

As an example, the processing of Operation Example 11 begins when obtainer 120 obtains, in the first time slot, a boiling instruction for fifth water heater 11e, included in the plurality of water heaters, from the owner of fifth water heater 11e. In other words, in Operation Example 11, it is necessary for fifth water heater 11e to boil in the first time slot.

First, when boiling by fifth water heater 11e is to be performed in the first time slot, determiner 130 determines the lowest price among a first price, a second price, and a third price (S70). The first price, the second price, and the third price will be described here.

The "first price" refers to a price when the boiling by fifth water heater 11e is performed using power supplied by the power company. In other words, the first price is the price paid to the power company when fifth water heater 11e boils using the power supplied by the power company.

When the boiling by fifth water heater 11e is performed using power with which charging equipment provided in housing complex 40 was charged (and more specifically, charging equipment included in power supply equipment 23), the price required to recharge the charging equipment is the "second price". In other words, the second price is the price for purchasing power supplied by the power company to recharge the power consumed due to the charging equipment discharging power for fifth water heater 11e to boil.

When the power required for the boiling by fifth water heater 11e is generated by solar power generation equipment provided in housing complex 40, the selling price of that generated power is the "third price". In other words, if the power required for the boiling by fifth water heater 11e has been generated by the solar power generation equipment, the third price is the price at which that power is sold to the power company, assuming the power is not consumed for boiling.

Furthermore, if it is determined in step S70 that the first price is lowest among the first price, the second price, and the third price, determiner 130 determines the boiling control information such that fifth water heater 11e boils using the power supplied by the power company (S71).

If it is determined in step S70 that the second price is lowest among the first price, the second price, and the third price, determiner 130 determines the boiling control information such that fifth water heater 11e boils using the power with which the charging equipment has been charged (S72).

If it is determined in step S70 that the third price is lowest among the first price, the second price, and the third price, determiner 130 determines the boiling control information such that fifth water heater 11e boils using the power generated by the solar power generation equipment (S73).

Furthermore, controller 140 controls the boiling by fifth water heater 11e based on the boiling control information determined by determiner 130 in steps S71, S72 and S73 (S74). More specifically, controller 140 controls communicator 110 to output the determined boiling control information to control device 13 of fifth individual dwelling 10e. Through this, control device 13 controls the boiling by fifth water heater 11e based on the obtained boiling control information.

In Operation Example 11, controller 140 controls the boiling by fifth water heater 11e to ensure the lowest amount of monetary loss. This makes it possible to minimize the monetary loss for the manager of housing complex 40.

[Operation Example 12]

FIG. 21 is a diagram illustrating a change in a remaining hot water amount in Operation Example 12 according to the present embodiment.

FIG. 22 is a flowchart of Operation Example 12 according to the present embodiment.

As illustrated in FIG. 21, the first time slot is a time slot immediately following the second time slot, and in the present operation example, a plurality of the first time slot (first time slot A and first time slot B) and a plurality of the second time slots (second time slot A and second time slot B) are provided in a single day. In addition, the first time slots and the second time slots are provided in an alternating manner.

(a) of FIG. 21 is a diagram illustrating an example in which all of the hot water used in a single day is boiled only in second time slot A. On the other hand, (b) of FIG. 21 is a diagram illustrating an example in which hot water is boiled in each of second time slot A and second time slot B, and is a diagram illustrating an example in which the processing of Operation Example 12 is performed.

Note that as illustrated in FIG. 22, steps S80, S81, and S82 are processing performed in the second time slot.

In the flowchart of Operation Example 12, illustrated in FIG. 22, first, obtainer 120 obtains a second boiling amount based on a first expected usage amount of hot water by the plurality of water heaters in each first time slot (S80). More specifically, obtainer 120 obtains, in second time slot A, the second boiling amount based on the first expected usage amount of hot water by the plurality of water heaters in each first time slot A (i.e., the first time slot after second time slot A).

The second boiling amount is a boiling amount based on the first expected usage amount by the plurality of water heaters for each first time slot (here, more specifically, first time slot A). For example, during second time slot A on a given day when Operation Example 12 is underway, control device 13 of first individual dwelling 10a predicts and determines the second boiling amount for that day based on the usage amount of hot water by first water heater 11a previous to that day. In this case, as the second boiling amount for first water heater 11a on that day, control device 13 determines an average value of the usage amount of hot water by first water heater 11a in first time slot A over a past predetermined period (e.g., a period of one week in the past from the previous day). In other words, the second boiling amount is the expected value for the amount of hot water used in first time slot A. The same applies to the plurality of water heaters aside from first water heater 11a.

Furthermore, communicator 110 obtains the second boiling amount from each of the plurality of control devices 13, and obtainer 120 then obtains the second boiling amount for each of the plurality of water heaters obtained by communicator 110.

Next, determiner 130 determines the obtained plurality of second boiling amounts as boiling amounts for corresponding ones of the plurality of water heaters in second time slot A (S81). In other words, for example, the second boiling amount obtained by obtainer 120 from control device 13 of first individual dwelling 10a via communicator 110 is determined as the boiling amount of first water heater 11a.

Controller 140 controls the boiling by each of the plurality of water heaters based on corresponding ones of the determined plurality of boiling amounts (S82). More specifically, controller 140 controls communicator 110 to output, to each of the plurality of control devices 13, a control signal instructing the plurality of water heaters to boil as indicated by the corresponding ones of the determined plurality of boiling amounts. As a result, each of the plurality of control devices 13 controls a corresponding one of the plurality of water heaters based on the obtained control signals.

Furthermore, after the processing of step S82 ends, the processing of step S80 is performed again. In the processing following this second instance of step S80, the processing is performed for second time slot B and first time slot B.

Here, it is not necessary for all of the hot water used in a single day to be boiled in a single second time slot (e.g., second time slot A), and only the amount corresponding to the first expected usage amount of the hot water in the first time slot following that single second time slot (e.g., first time slot A) is boiled, as indicated in (b) of FIG. 21. Shortening the boiling time of each water heater makes it possible to avoid exceeding the reference power and finish the boiling in a cheaper time slot.

In Operation Example 12, the time required for boiling in the second time slot, where the electricity rate is lower, can be shortened. For example, hot water supply system 100 can suppress the demand power (and more specifically, the maximum value of the demand power) of housing complex 40 as a whole, as compared to a case where all the hot water used in one day is boiled in a single second time slot, as indicated in (a) of FIG. 21.

[Effects, Etc.]

Aspects according to the present embodiment are as follows.

In hot water supply system 100 according to a first aspect, hot water supply system 100 includes obtainer 120, determiner 130, and controller 140. Obtainer 120 obtains (i) a first boiling amount for each of a plurality of water heaters and (ii) a reference power of housing complex 40 in which the plurality of water heaters are provided, the reference power being from a second time slot having a cheaper electricity rate than a first time slot. When determining, based on the plurality of first boiling amounts obtained, that a demand power of housing complex 40 as a whole will exceed the reference power obtained if the plurality of water heaters start boiling simultaneously in the second time slot, determiner 130 determines, prior to the second time slot, a schedule that, of first water heater 11a and second water heater 11b included in the plurality of water heaters, delays a start of boiling by second water heater 11b, for which the first boiling amount is lower than first water heater 11a. Controller 140 controls boiling by the plurality of water heaters in the second time slot based on the schedule determined.

Through this, as described in Operation Example 1, delaying the start of boiling by second water heater 11b, which has a low first boiling amount, realizes hot water supply system 100, which is capable of suppressing the demand power (and more specifically, the maximum value of the demand power) of housing complex 40 as a whole. For example, as indicated in (b) of FIG. 3, situations where the maximum value of the demand power exceeds the reference power are suppressed. This makes it less likely that the electricity rate for housing complex 40 will rise.

Furthermore, the first boiling amount is the amount of hot water to be stored in each of the storage tanks of the plurality of water heaters during the second time slot, when the electricity rate is lower, and as the first boiling amount decreases, the time required for boiling by the water heaters decreases as well. In other words, the boiling time of the water heater having a low first boiling amount (here, second water heater 11b) is short, and thus second water heater 11b tends to finish boiling during the second time slot, when the electricity rate is lower, even if the boiling start time thereof is delayed. In other words, it is easy for the plurality of water heaters, including second water heater 11b, to finish boiling during the second time slot, when the usage amount and usage frequency of hot water is lower, and it is less likely that no hot water will remain in each of the plurality of water heaters (i.e., that the hot water will run out).

In hot water supply system 100 according to a second aspect, in the first aspect, the first time slot is a time slot immediately following the second time slot, and obtainer 120 obtains, for each of the plurality of water heaters, a second boiling amount based on a first expected usage amount of hot water in the first time slot. Determiner 130 determines the plurality of second boiling amounts obtained, as boiling amounts for corresponding ones of the plurality of water heaters in the second time slot.

Through this, as described in Operation Example 12, the time required for boiling in the second time slot, where the electricity rate is lower, can be shortened. For example, hot water supply system 100 can suppress the demand power (and more specifically, the maximum value of the demand power) of housing complex 40 as a whole, as compared to a case where all the hot water used in one day is boiled in a single second time slot, as indicated in (a) of FIG. 21.

In hot water supply system 100 according to a third aspect, in the first or second aspect, obtainer 120 obtains first information indicating a usage state of the hot water at a time when the schedule was determined, or a second expected usage amount of the hot water in the second time slot, of second water heater 11b for which the start of the boiling has been delayed by the schedule determined. When it is determined that second water heater 11b will run out of hot water based on the first information obtained or the second expected usage amount obtained, determiner 130 updates the schedule to expedite the start of the boiling by second water heater 11b.

Through this, as described in Operation Example 2, if it is determined that second water heater 11b, for which boiling was delayed in the schedule determined in step S40, will run out of hot water in the second time slot, the schedule is updated. More specifically, determiner 130 updates the schedule to cause second water heater 11b to start boiling before the hot water runs out. This suppresses the occurrence of situations where second water heater 11b runs out of hot water.

In hot water supply system 100 according to a fourth aspect, in any one of the first to third aspects, obtainer 120 obtains second information indicating a third expected usage amount of the hot water by each of the plurality of water heaters in each of times. When, based on the schedule determined and the second information obtained, it is determined that third water heater 11c, for which a time from a planned end time of boiling to a planned usage time of hot water exceeds a reference time, is present among the plurality of water heaters, determiner 130 updates the schedule to cause third water heater 11c heater to temporarily stop after boiling and then boil again in the second time slot.

Through this, as described in Operation Example 3, if third water heater 11c for which the time from the planned end time of the boiling to the planned usage time of the hot water exceeds the reference time is present in the schedule determined in step S40, the schedule is updated. More specifically, determiner 130 updates the schedule such that in the second time slot, after boiling, third water heater 11c stops temporarily and then starts boiling again. Accordingly, situations where the temperature of the stored hot water drops in third water heater 11c due to the time from the planned end time of the boiling to the planned usage time of the hot water being prolonged are suppressed. In other words, situations where the temperature of the stored hot water drops in third water heater 11c are suppressed by determining a schedule that shortens the time from the planned end time of the boiling to the planned usage time of the hot water.

In hot water supply system 100 according to a fifth aspect, in any one of the first to fourth aspects, after the schedule has been determined, obtainer 120 obtains, in the second time slot, a first used power used by electrical equipment in housing complex 40 aside from the plurality of water heaters at a present time. Based on the plurality of first boiling amounts obtained and the first used power obtained, determiner 130 updates the schedule to ensure that the demand power of housing complex 40 as a whole does not exceed the reference power obtained and boiling is performed in order from a water heater, among the plurality of water heaters, for which the first boiling amount is highest.

Through this, as described in Operation Example 4, in the second time slot, if the demand power is lower than the reference power, i.e., if excess power is available, the schedule is updated to increase the number of water heaters that boil. This makes it more likely that the boiling will end during the second time slot, when the electricity rate is lower. In particular, determiner 130 updating the schedule such that the boiling is performed in order from the water heater having the highest first boiling amount among the plurality of water heaters makes it more likely that the boiling will end during the second time slot, when the electricity rate is lower.

In hot water supply system 100 according to a sixth aspect, in the first aspect, when a planned end time of the boiling by second water heater 11b, for which the start of the boiling has been delayed by the schedule determined, falls within the first time slot, an increase in an electricity rate caused by the planned end time falling within the first time slot, compared to the electricity rate when the planned end time falls within the second time slot, is taken as a first price increase, and an increase in the electricity rate caused by the demand power exceeding the reference power obtained, due to the boiling by second water heater 11b being performed to cause the planned end time to fall within the second time slot, is taken as a second price increase. Determiner 130 increases the reference power and updates the schedule to cause the planned end time to fall within the second time slot when the second price increase is lower than the first price increase.

Through this, as described in Operation Example 5, by comparing the first price increase with the second price increase, hot water supply system 100 can update the schedule such that the electricity rate is lower throughout the year.

In hot water supply system 100 according to a seventh aspect, in the first aspect, when a planned end time of the boiling by second water heater 11b, for which the start of the boiling has been delayed by the schedule determined, falls within the first time slot, an increase in an electricity rate caused by the planned end time falling within the first time slot, compared to the electricity rate when the planned end time falls within the second time slot, is taken as a first price increase, and an increase in the electricity rate caused by the demand power exceeding the reference power obtained, due to the boiling by second water heater 11b being performed to cause the planned end time to fall within the second time slot, is taken as a second price increase. As a refund amount to an owner of second water heater 11b, determiner 130 outputs a first refund amount that is the first price increase, or calculates and outputs a second refund amount that is a value obtained by multiplying a sum of the first price increase and the second price increase by a predetermined percentage.

In this manner, performing such processing of calculating the refund amount ensures the owner of second water heater 11b, for which the start of boiling was delayed in the schedule determined in step S40, is less likely to feel that the situation is unfair.

In hot water supply system 100 according to an eighth aspect, in the seventh aspect, obtainer 120 obtains a refund instruction that is an instruction from the owner. The refund instruction indicates that the first refund amount has been selected as the refund amount, or indicates that the second refund amount has been selected as the refund amount and indicates a numerical value of the predetermined percentage. Determiner 130 calculates and outputs the refund amount based on the obtained refund instruction.

In this manner, performing such processing of calculating the refund amount ensures the owner of second water heater 11b, for which the start of boiling was delayed in the schedule determined in step S40, is even less likely to feel that the situation is unfair.

In hot water supply system 100 according to a ninth aspect, in the eighth aspect, determiner 130 increases the reference power and updates the schedule to cause the planned end time to fall within the second time slot when the second price increase is lower than a sum of the first price increase and the refund amount.

Through this, as described in Variation 1 on Operation Example 5, by comparing the sum of first price increase and the refund amount with the second price increase, hot water supply system 100 can update the schedule such that the electricity rate is even lower throughout the year.

In hot water supply system 100 according to a tenth aspect, in the eighth or ninth aspect, when a plurality of second water heaters 11b are provided, obtainer 120 obtains the refund instruction from each of a plurality of the owners. Determiner 130 calculates the refund amount to each of the plurality of the owners based on the plurality of refund instructions obtained, and updates the schedule to delay the start of the boiling by second water heater 11b owned by the owner for which the refund amount, among the plurality of refund amounts calculated, is lowest.

Through this, as described in Variation 2 on Operation Example 5, determiner 130 may suppress the refund amount paid by the manager of housing complex 40 by updating the schedule to delay the start of boiling by second water heater 11b owned by the owner having the lowest refund amount.

In hot water supply system 100 according to an eleventh aspect, in the first aspect, obtainer 120 obtains, in the second time slot, a boiling instruction for fourth water heater 11d heater included in the plurality of water heaters, from an owner of fourth water heater 11d. When it is determined, based on the boiling instruction obtained, that the demand power of housing complex 40 as a whole will exceed the reference power obtained if fourth water heater 11d starts boiling, determiner 130 updates the schedule to stop boiling by a water heater, among the plurality of water heaters, that is boiling, and start boiling by fourth water heater 11d.

Through this, as described in Operation Example 6, the occurrence of a problem where the owner of fourth water heater 11d is dissatisfied can be suppressed even if obtainer 120 obtains the boiling instruction for fourth water heater 11d from the owner of fourth water heater 11d in the second time slot.

In hot water supply system 100 according to a twelfth aspect, in the first aspect, prior to the second time slot, obtainer 120 obtains a second used power based on an expected usage amount, in the second time slot, of electrical equipment in housing complex 40 aside from the plurality of water heaters. When it is determined, based on the plurality of first boiling amounts obtained and the second used power obtained, that the demand power of housing complex 40 as a whole will, in the second time slot, exceed the reference power obtained, determiner 130 updates the schedule to stop boiling by the plurality of water heaters.

Through this, as described in Operation Example 7, prior to the start of the second time slot (in step S55), determiner 130 determines whether the demand power will exceed the reference power based on the second used power corresponding to the expected power amount in the second time slot. By hot water supply system 100 stopping the boiling by the water heaters when the demand power will exceed the reference power, the schedule can be updated such that the demand power does not exceed the reference power. In other words, hot water supply system 100 capable of suppressing the demand power (and more specifically, the maximum value of the demand power) of housing complex 40 as a whole is realized.

In hot water supply system 100 according to a thirteenth aspect, in the first aspect, after the schedule has been determined, obtainer 120 obtains, in the second time slot, a first used power used by electrical equipment in housing complex 40 aside from the plurality of water heaters at a present time. When it is determined, based on the plurality of first boiling amounts obtained and the first used power obtained, that the demand power of housing complex 40 as a whole will, in the second time slot, exceed the reference power obtained, determiner 130 updates the schedule to stop boiling by the plurality of water heaters.

Through this, as described in Operation Example 8, determiner 130 determines whether the demand power will exceed the reference power based on the first used power, which is the measured value of the power of the electrical equipment aside from the plurality of water heaters, during the first time slot (in step S101). By hot water supply system 100 stopping the boiling by the water heaters when the demand power will exceed the reference power, the schedule can be updated such that the demand power does not exceed the reference power. In other words, hot water supply system 100 capable of suppressing the demand power (and more specifically, the maximum value of the demand power) of housing complex 40 as a whole is realized.

In hot water supply system 100 according to a fourteenth aspect, in the first aspect, when it is determined, based on the schedule determined and the reference power obtained, that in the second time slot, the demand power of housing complex 40 as a whole will exceed the reference power obtained, determiner 130 updates the schedule to supply power to housing complex 40 from power supply equipment included in housing complex 40.

Through this, as described in Operation Example 9, if it is determined that the demand power will exceed the reference power, the schedule is updated such that power is supplied from power supply equipment 23 to housing complex 40. Accordingly, situations where the power supplied by the power company exceeds the reference power are suppressed. This makes it less likely that the electricity rate for housing complex 40 will rise.

In hot water supply system 100 according to a fifteenth aspect, in the first or fourteenth aspect, when a planned end time of the boiling by second water heater 11b, for which the start of the boiling has been delayed by the schedule determined, falls within the first time slot, determiner 130 updates the schedule to supply power from power supply equipment included in housing complex 40 for the boiling by second water heater 11b heater in the first time slot.

Through this, as described in Operation Example 10, if the planned end time of the boiling by second water heater 11b falls within the first time slot, the schedule is updated to supply power from power supply equipment 23 for the boiling. It is therefore not necessary for power to be supplied from the power company to housing complex 40 for the boiling. This makes it possible to keep the electricity rate for housing complex 40 low.

In hot water supply system 100 according to a sixteenth aspect, in the first, fourteenth, or fifteenth aspect, when boiling by fifth water heater 11e included in the plurality of water heaters is to be performed in the first time slot, a price when the boiling by fifth water heater 11e is performed using power supplied by a power company is taken as a first price, a price required to recharge charging equipment provided in housing complex 40, when the boiling by fifth water heater 11e is performed using power with which the charging equipment has been charged, is taken as a second price, and a selling price of power required for the boiling by fifth water heater 11e, when the power required has been generated by solar power generation equipment included in housing complex 40, is taken as a third price. Determiner 130 determines boiling control information to: cause fifth water heater 11e to boil using the power supplied by the power company, when the first price is lowest among the first price, the second price, and the third price; cause fifth water heater 11e to boil using the power with which the charging equipment has been charged, when the second price is lowest among the first price, the second price, and the third price; and cause fifth water heater 11e to boil using the power generated by the solar power generation equipment, when the third price is lowest among the first price, the second price, and the third price. Controller 140 controls boiling by the water heater based on the boiling control information determined.

Through this, as described in Operation Example 11, controller 140 controls the boiling by fifth water heater 11e to ensure the lowest amount of monetary loss. This makes it possible to minimize the monetary loss for the manager of housing complex 40.

In a hot water supply method according to a seventeenth aspect, the hot water supply method includes steps of obtaining, determining, and controlling. In the obtaining, (i) a first boiling amount for each of a plurality of water heaters, and (ii) a reference power of housing complex 40 in which the plurality of water heaters are provided, are obtained, the reference power being from a second time slot having a cheaper electricity rate than a first time slot. In the determining, when it is determined, based on the plurality of first boiling amounts obtained, that a demand power of housing complex 40 as a whole will exceed the reference power obtained if the plurality of water heaters start boiling simultaneously in the second time slot, a schedule is determined, prior to the second time slot, that, of first water heater 11a and second water heater 11b included in the plurality of water heaters, delays a start of boiling by second water heater 11b, for which the first boiling amount is lower than first water heater 11a. In the controlling, boiling by the plurality of water heaters in the second time slot is controlled slot based on the schedule determined.

Through this, as described in Operation Example 1, delaying the start of boiling by second water heater 11b, which has a low first boiling amount, realizes the hot water supply method, which is capable of suppressing the demand power (and more specifically, the maximum value of the demand power) of housing complex 40 as a whole. For example, as indicated in (b) of FIG. 3, situations where the maximum value of the demand power exceeds the reference power are suppressed. This makes it less likely that the electricity rate for housing complex 40 will rise.

Furthermore, the first boiling amount is the amount of hot water to be stored in each of the storage tanks of the plurality of water heaters during the second time slot, when the electricity rate is lower, and as the first boiling amount decreases, the time required for boiling by the water heaters decreases as well. In other words, the boiling time of the water heater having a low first boiling amount (here, second water heater 11b) is short, and thus second water heater 11b tends to finish boiling during the second time slot, when the electricity rate is lower, even if the boiling start time thereof is delayed. In other words, it is easy for the plurality of water heaters, including second water heater 11b, to finish boiling during the second time slot, when the usage amount and usage frequency of hot water is lower, and it is less likely that no hot water will remain in each of the plurality of water heaters (i.e., that the hot water will run out).

[Embodiment 2]

Embodiment 2 will be described next. Embodiment 2 differs from Embodiment 1 in that the plurality of control devices 13 and power measurement device 22 are not provided. The following descriptions will focus on the differences from Embodiment 1, and descriptions of common points will be omitted or simplified.

The configuration of hot water supply system 100a according to the present embodiment will be described with reference to FIG. 23.

FIG. 23 is a block diagram illustrating the functional configuration of hot water supply system 100a according to the present embodiment.

Embodiment 2 has the same configuration as Embodiment 1 aside from the plurality of control devices 13 and power measurement device 22 not being provided.

The information output from the water heater and obtained by communicator 110 through control device 13 in Embodiment 1 is, in the present embodiment, obtained by communicator 110 by being output directly from the water heater to communicator 110.

In Embodiment 1, communicator 110 obtains, from control device 13, the individual dwelling power information pertaining to the power used by electrical equipment 12, and obtains, from power measurement device 22, the common area power information pertaining to the power used by electrical equipment 21. In the present embodiment, however, communicator 110 obtains power meter information stored in a power meter provided in high-voltage power reception point 30. The power meter information indicates the demand power of housing complex 40 as a whole. In other words, by subtracting the power required by each of the plurality of water heaters (consumed power) from the demand power of housing complex 40 as a whole indicated by the power meter information, hot water supply system 100a can obtain information on the power pertaining to the electrical equipment aside from the plurality of water heaters in housing complex 40. As a result, hot water supply system 100a according to the present embodiment can perform the same operations as hot water supply system 100 according to Embodiment 1.

[Other Embodiments]

Although embodiments have been described thus far, the present invention is not limited to the foregoing embodiments.

Note that the first time slot was described as being from 7 AM to 11 PM, and the second time slot as being from 11 PM to 7 AM the next, as an example, but the time slots are not limited thereto.

In Embodiments 1 and 2, the first boiling amount was determined by control device 13, but the configuration is not limited thereto. For example, hot water supply system 100 may calculate the first boiling amount from the target boiling amount and the remaining hot water amount in the storage tank.

In the individual dwelling power information, a period of one week in the past from the previous day was used as the predetermined period in the past for determining the expected used power for electrical equipment 12, but the predetermined period in the past is not limited thereto. For example, a period of one week before and after the day one year previous to the stated day may be used as the predetermined period in the past. The same applies when the expected used power for electrical equipment 21, the second expected usage amount for second water heater 11b, the third expected usage amount for third water heater 11c, and the expected second boiling amount for first water heater 11a are determined.

Additionally, the method through which the devices communicate with each other described in the foregoing embodiments is merely one example. The method through which the devices communicate with each other is not particularly limited.

Additionally, processing executed by a specific processing unit in the foregoing embodiments may be executed by a different processing unit. Additionally, the order of multiple processes may be changed, and multiple processes may be executed in parallel.

Additionally, in the foregoing embodiments, the constituent elements such as the obtainer, the determiner, the controller, and the like may be implemented by executing software programs corresponding to those constituent elements. Each constituent element may be realized by a program executor such as a CPU or a processor reading out and executing a software program recorded into a recording medium such as a hard disk or semiconductor memory.

Constituent elements such as the obtainer, the determiner, the controller, and the like may be implemented by hardware. For example, constituent elements such as controllers may be circuitry (or integrated circuitry). This circuitry may constitute a single overall circuit, or may be separate circuits. The circuitry may be generic circuitry, or may be dedicated circuitry.

The general or specific aspects of the present invention may be implemented by a system, a device, a method, an integrated circuit, a computer program, or a computer-readable recording medium such as a CD-ROM. These forms may also be implemented by any desired combination of systems, devices, methods, integrated circuits, computer programs, and recording media. For example, the present invention may be realized as the hot water supply system according to the foregoing embodiments, or as a hot water supply method executed by the hot water supply system. The present invention may be implemented as a program for causing a computer to execute such a hot water supply method, or as a non-transitory recording medium having such a program recorded thereon. Such a program includes an application program for causing a computer, such as a general-purpose information terminal or the like, to function as the hot water supply system according to the foregoing embodiments.

Note that embodiments resulting from variations of the above embodiments arrived at by those skilled in the art, as well as embodiments resulting from optional combinations of elements and functions in the above embodiments are included within the present invention as long as the embodiments do not depart from the scope of the present invention.

[Reference Signs List]

11a First water heater
11b Second water heater
11c Third water heater
11d Fourth water heater
11e Fifth water heater
12, 21 Electrical equipment
23 Power supply equipment
40 Housing complex
Pa Reference power
Pb Demand power
100, 100a Hot water supply system
120 Obtainer
130 Determiner
140 Controller

**Claims**

1. A hot water supply system comprising:

   an obtainer that obtains (i) a first boiling amount for each of a plurality of water heaters and (ii) a reference power of a housing complex in which the plurality of water heaters are provided, the reference power being from a second time slot having a cheaper electricity rate than a first time slot;
   a determiner that, when determining, based on the plurality of first boiling amounts obtained, that a demand power of the housing complex as a whole will exceed the reference power obtained if the plurality of water heaters start boiling simultaneously in the second time slot, determines, prior to the second time slot, a schedule that, of a first water heater and a second water heater included in the plurality of water heaters, delays a start of boiling by the second water heater, for which the first boiling amount is lower than the first water heater; and
   a controller that controls boiling by the plurality of water heaters in the second time slot based on the schedule determined.

2. The hot water supply system according to claim 1,

wherein the first time slot is a time slot immediately following the second time slot,
the obtainer obtains, for each of the plurality of water heaters, a second boiling amount based on a first expected usage amount of hot water in the first time slot, and
the determiner determines the plurality of second boiling amounts obtained, as boiling amounts for corresponding ones of the plurality of water heaters in the second time slot.

3. The hot water supply system according to claim 1,

wherein the obtainer obtains first information indicating a usage state of the hot water at a time when the schedule was determined, or a second expected usage amount of the hot water in the second time slot, of the second water heater for which the start of the boiling has been delayed by the schedule determined, and
when it is determined that the second water heater will run out of hot water based on the first information obtained or the second expected usage amount obtained, the determiner updates the schedule to expedite the start of the boiling by the second water heater.

4. The hot water supply system according to claim 1,

wherein the obtainer obtains second information indicating a third expected usage amount of the hot water by each of the plurality of water heaters in each of times, and
when, based on the schedule determined and the second information obtained, it is determined that a third water heater, for which a time from a planned end time of boiling to a planned usage time of hot water exceeds a reference time, is present among the plurality of water heaters, the determiner updates the schedule to cause the third water heater to temporarily stop after boiling and then boil again in the second time slot.

5. The hot water supply system according to claim 1,

wherein after the schedule has been determined, the obtainer obtains, in the second time slot, a first used power used by electrical equipment in the housing complex aside from the plurality of water heaters at a present time, and
based on the plurality of first boiling amounts obtained and the first used power obtained, the determiner updates the schedule to ensure that the demand power of the housing complex as a whole does not exceed the reference power obtained and boiling is performed in order from a water heater, among the plurality of water heaters, for which the first boiling amount is highest.

6. The hot water supply system according to claim 1,

wherein when a planned end time of the boiling by the second water heater, for which the start of the boiling has been delayed by the schedule determined, falls within the first time slot,
an increase in an electricity rate caused by the planned end time falling within the first time slot, compared to the electricity rate when the planned end time falls within the second time slot, is taken as a first price increase,
an increase in the electricity rate caused by the demand power exceeding the reference power obtained, due to the boiling by the second water heater being performed to cause the planned end time to fall within the second time slot, is taken as a second price increase, and
the determiner increases the reference power and updates the schedule to cause the planned end time to fall within the second time slot when the second price increase is lower than the first price increase.

7. The hot water supply system according to claim 1,

wherein when a planned end time of the boiling by the second water heater, for which the start of the boiling has been delayed by the schedule determined, falls within the first time slot,
an increase in an electricity rate caused by the planned end time falling within the first time slot, compared to the electricity rate when the planned end time falls within the second time slot, is taken as a first price increase,
an increase in the electricity rate caused by the demand power exceeding the reference power obtained, due to the boiling by the second water heater being performed to cause the planned end time to fall within the second time slot, is taken as a second price increase, and
as a refund amount to an owner of the second water heater, the determiner:

outputs a first refund amount that is the first price increase, or
calculates and outputs a second refund amount that is a value obtained by multiplying a sum of the first price increase and the second price increase by a predetermined percentage.

8. The hot water supply system according to claim 7,

wherein the obtainer obtains a refund instruction that is an instruction from the owner,
the refund instruction indicates that the first refund amount has been selected as the refund amount, or indicates that the second refund amount has been selected as the refund amount and indicates a numerical value of the predetermined percentage, and
the determiner calculates and outputs the refund amount based on the refund instruction obtained.

9. The hot water supply system according to claim 8,
wherein the determiner increases the reference power and updates the schedule to cause the planned end time to fall within the second time slot when the second price increase is lower than a sum of the first price increase and the refund amount.

10. The hot water supply system according to claim 8 or 9,

wherein when a plurality of the second water heaters are provided,
the obtainer obtains the refund instruction from each of a plurality of the owners, and
the determiner:

calculates the refund amount to each of the plurality of the owners based on the plurality of refund instructions obtained; and
updates the schedule to delay the start of the boiling by the second water heater owned by the owner for which the refund amount, among the plurality of refund amounts calculated, is lowest.

11. The hot water supply system according to claim 1,

wherein the obtainer obtains, in the second time slot, a boiling instruction for a fourth water heater included in the plurality of water heaters, from an owner of the fourth water heater, and
when it is determined, based on the boiling instruction obtained, that the demand power of the housing complex as a whole will exceed the reference power obtained if the fourth water heater starts boiling, the determiner updates the schedule to stop boiling by a water heater, among the plurality of water heaters, that is boiling, and start boiling by the fourth water heater.

12. The hot water supply system according to claim 1,

wherein prior to the second time slot, the obtainer obtains a second used power based on an expected usage amount, in the second time slot, of electrical equipment in the housing complex aside from the plurality of water heaters, and
when it is determined, based on the plurality of first boiling amounts obtained and the second used power obtained, that the demand power of the housing complex as a whole will, in the second time slot, exceed the reference power obtained, the determiner updates the schedule to stop boiling by the plurality of water heaters.

13. The hot water supply system according to claim 1,

wherein after the schedule has been determined, the obtainer obtains, in the second time slot, a first used power used by electrical equipment in the housing complex aside from the plurality of water heaters at a present time, and
when it is determined, based on the plurality of first boiling amounts obtained and the first used power obtained, that the demand power of the housing complex as a whole will, in the second time slot, exceed the reference power obtained, the determiner updates the schedule to stop boiling by the plurality of water heaters.

14. The hot water supply system according to claim 1,
wherein when it is determined, based on the schedule determined and the reference power obtained, that in the second time slot, the demand power of the housing complex as a whole will exceed the reference power obtained, the determiner updates the schedule to supply power to the housing complex from power supply equipment included in the housing complex.

**15.** The hot water supply system according to claim 1,

wherein when a planned end time of the boiling by the second water heater, for which the start of the boiling has been delayed by the schedule determined, falls within the first time slot,
the determiner updates the schedule to supply power from power supply equipment included in the housing complex for the boiling by the second water heater in the first time slot.

**16.** The hot water supply system according to claim 1,

wherein when boiling by a fifth water heater included in the plurality of water heaters is to be performed in the first time slot,
a price when the boiling by the fifth water heater is performed using power supplied by a power company is taken as a first price,
a price required to recharge charging equipment provided in the housing complex, when the boiling by the fifth water heater is performed using power with which the charging equipment has been charged, is taken as a second price, and
when a selling price of power required for the boiling by the fifth water heater, when the power required has been generated by solar power generation equipment included in the housing complex, is taken as a third price,
the determiner determines boiling control information to:

cause the fifth water heater to boil using the power supplied by the power company, when the first price is lowest among the first price, the second price, and the third price;
cause the fifth water heater to boil using the power with which the charging equipment has been charged, when the second price is lowest among the first price, the second price, and the third price; and
cause the fifth water heater to boil using the power generated by the solar power generation equipment, when the third price is lowest among the first price, the second price, and the third price, and

the controller controls boiling by the water heater based on the boiling control information determined.

**17.** A hot water supply method comprising:

obtaining (i) a first boiling amount for each of a plurality of water heaters, and (ii) a reference power of a housing complex in which the plurality of water heaters are provided, the reference power being from a second time slot having a cheaper electricity rate than a first time slot;
when it is determined, based on the plurality of first boiling amounts obtained, that a demand power of the housing complex as a whole will exceed the reference power obtained if the plurality of water heaters start boiling simultaneously in the second time slot, determining, prior to the second time slot, a schedule that, of a first water heater and a second water heater included in the plurality of water heaters, delays a start of boiling by the second water heater, for which the first boiling amount is lower than the first water heater; and
controlling boiling by the plurality of water heaters in the second time slot based on the schedule determined.

# FIG. 1

# FIG. 2

```
          ┌─────────────┐
          │    Start    │
          └──────┬──────┘
                 │
                 ▼              ⌒S10
   ┌─────────────────────────────┐
   │ Obtain first boiling amount │
   │ from plurality of water     │
   │ heaters                     │
   └──────────────┬──────────────┘
                  │
                  ▼            ⌒S20
   ┌─────────────────────────────┐
   │ Obtain reference power      │
   └──────────────┬──────────────┘
                  │
                  ▼            ⌒S30
   ╱─────────────────────────╲
  ╱ Demand power of overall    ╲      No
 ⟨  housing complex greater     ⟩─────────────────┐
  ╲ than reference power?      ╱                   │
   ╲─────────────────────────╱                     │
                  │ Yes                            │
                  ▼            ⌒S40                 ▼              ⌒S40a
   ┌─────────────────────────────┐   ┌──────────────────────────────┐
   │ Determine schedule that     │   │ Determine schedule that      │
   │ delays start of boiling by  │   │ starts boiling by plurality  │
   │ second water heater having  │   │ of water heaters             │
   │ first boiling amount that is│   │ simultaneously               │
   │ lower among first water     │   └──────────────┬───────────────┘
   │ heater and second water     │                  │
   │ heater                      │                  │
   └──────────────┬──────────────┘                  │
                  │◄─────────────────────────────────┘
                  ▼            ⌒S90
   ┌─────────────────────────────┐
   │ Control boiling by plurality│
   │ of water heaters based on   │
   │ determined schedule         │
   └──────────────┬──────────────┘
                  │
                  ▼
          ┌─────────────┐
          │     End     │
          └─────────────┘
```

First time slot

Second time slot

# FIG. 3

**(a)**

Consumed power

Demand power · · · · · ·
Reference power · · · · · · · 
Reference power exceeded

| Second water heater |
| Water heater |
| First water heater |

Predicted value for power consumed by electrical equipment of individual dwellings and electrical equipment of common area

t0

Boiling start t1

Time

**(b)**

Consumed power

Reference power · · · · · ·
Demand power · · · · · ·

| Water heater | Second water heater |
| First water heater |

Predicted value for power consumed by electrical equipment of individual dwellings and electrical equipment of common area

t0

Boiling start t1

Time

EP 4 546 247 A1

# FIG. 4

S40

First time slot

Obtain first information indicating usage state of hot water, or second expected usage amount of hot water in second time slot, by second water heater — S41

Will second water heater run out of hot water based on first information or second expected usage amount? — S42

No

Yes

Update schedule to cause second water heater to start boiling earlier — S43

Second time slot

Control boiling by plurality of water heaters based on updated schedule — S110

Control boiling by plurality of water heaters based on determined schedule — S90

End

# FIG. 5

S40

S45

Obtain second information indicating third expected usage amount of hot water by each of plurality of water heaters in each time

First time slot

S46

Based on determined schedule and second information, is third water heater for which time from planned end time of boiling to planned usage time of hot water exceeds reference time present? — No

Yes

S47

Update schedule such that after boiling, third water heater stops temporarily and then starts boiling again

Second time slot

S110

Control boiling by plurality of water heaters based on updated schedule

S90

Control boiling by plurality of water heaters based on determined schedule

End

# FIG. 6

S90

S91

Obtain first used power at present time by electrical equipment aside from plurality of water heaters in housing complex

S92

Based on plurality of first boiling amounts and first used power, update schedule such that demand power does not exceed reference power and plurality of water heaters boil in order from water heater having highest first boiling amount

S110

Control boiling by plurality of water heaters based on updated schedule

End

Second time slot

# FIG. 7

(a)

Consumed power

Reference power

Water heater | Second water heater

First water heater

Predicted value for power consumed by electrical equipment of individual dwellings and electrical equipment of common area

t0

Boiling start t1

Time

(b)

Consumed power

Reference power

Second water heater

Water heater

First water heater

Measured value for power consumed by electrical equipment of individual dwellings and electrical equipment of common area

t0

Time t11 of step S92

Boiling start t1

Time

EP 4 546 247 A1

# FIG. 8

S40

S50

Is second price increase lower than first price increase when planned end time of boiling by second water heater falls within first time slot in determined schedule?

No

First time slot

Yes

S51

Update schedule to increase reference power and bring planned end time of boiling into second time slot

Second time slot

S110

Control boiling by plurality of water heaters based on updated schedule

S90

Control boiling by plurality of water heaters based on determined schedule

End

# FIG. 9

(a)

Consumed power

Reference power Pa

Water heater | Second water heater

First water heater

Predicted value for power consumed by electrical equipment of individual dwellings and electrical equipment of common area

Boiling in first time slot

t0

Boiling start t1

t2

Time

(b)

Consumed power

Post-change reference power Pc
Demand power Pb
Reference power Pa

Second water heater

Water heater

First water heater

Predicted value for power consumed by electrical equipment of individual dwellings and electrical equipment of common area

t0

Boiling start t1

t2

Time

FIG. 10

```
        ┌──────────────┐
        │     S40      │
        └──────────────┘
                │
                │            ╱S50a
                ▼
      ╱─────────────────────╲
     ╱  Is second price      ╲
    ╱   increase lower than   ╲
   │    sum of first          │
   │    price increase and    │
   │    refund                │ No
   │    amount when planned   │────────────┐
   │    end time of boiling   │            │
   │    by                    │            │
   │    second water heater   │            │
    ╲   falls                ╱             │
     ╲  within first time   ╱              │
      ╲ slot in            ╱               │
       ╲determined schedule?╱              │
        ╲─────────────────╱                │
                │ Yes                      │
                ▼                          ▼
        ┌──────────────┐          ┌──────────────┐
        │     S51      │          │     S90      │
        └──────────────┘          └──────────────┘
```

# FIG. 11

Refund amount:
owner of second water heater (A) <
owner of second water heater (B)

Consumed power

Reference power

Second water heater (B)

Water heater | Second water heater (A)

First water heater

Predicted value for power consumed by electrical equipment of individual dwellings and electrical equipment of common area

t0                                    t2                    Time

(a)

Refund amount:
owner of second water heater (A) >
owner of second water heater (B)

Consumed power

Reference power Pa

Second water heater (A)

Water heater | Second water heater (B)

First water heater

Predicted value for power consumed by electrical equipment of individual dwellings and electrical equipment of common area

t0                                    t2                    Time

(b)

EP 4 546 247 A1

# FIG. 12

S40

S52

Does planned end time of boiling by at least one second water heater fall within first time slot in determined schedule?

No

Yes

S53

Calculate refund amounts based on plurality of refund instructions, update schedule to delay start of boiling by second water heater owned by owner receiving lowest refund amount among plurality of calculated refund amounts

First time slot

Second time slot

S110

Control boiling by plurality of water heaters based on updated schedule

S90

Control boiling by plurality of water heaters based on determined schedule

End

# FIG. 13

```
        ┌──────────────┐
        │     S90      │
        └──────────────┘
                │
                ▼           S95
┌──────────────────────────────┐
│ Obtain boiling instruction for│
│ fourth water heater from      │
│ owner of fourth water heater  │
└──────────────────────────────┘
                │
                ▼           S96
      ╱────────────────────╲
     │ Will demand power exceed│
     │ obtained reference power│        No
     │ when boiling by fourth  │──────────────────┐
     │ water heater is started │                  │
     │ based on boiling        │                  │
     │ instruction?            │                  │
      ╲────────────────────╱                      │
                │ Yes                             │
                ▼           S97                   ▼           S120
┌──────────────────────────┐     ┌──────────────────────────┐
│ Update schedule to stop  │     │ Update schedule to continue│
│ boiling by water heaters │     │ boiling by plurality of water│
│ currently boiling and start│   │ heaters and start boiling by│
│ boiling by fourth water heater│ │ fourth water heater       │
└──────────────────────────┘     └──────────────────────────┘
                │                              │
                ▼◄─────────────────────────────┘
                            S110
┌──────────────────────────┐
│ Control boiling by plurality of│
│ water heaters based on    │
│ updated schedule          │
└──────────────────────────┘
                │
                ▼
        ┌──────────────┐
        │     End      │
        └──────────────┘
```

Second time slot

# FIG. 14

S20

**S21**
Obtain second used power based on expected usage amount, in second time slot, by electrical equipment aside from plurality of water heaters in housing complex

**S30**
Demand power of overall housing complex greater than reference power? — No

Yes

**S40**
Determine schedule that delays start of boiling by second water heater among first water heater and second water heater having lower first boiling amount

**S40a**
Determine schedule that starts boiling by plurality of water heaters simultaneously

**S55**
Based on plurality of first boiling amounts and second used power, does demand power in second time slot exceed reference power? — No

Yes

**S56**
Update schedule to stop boiling by plurality of water heaters

**S110**
Control boiling by plurality of water heaters based on updated schedule

**S90**
Control boiling by plurality of water heaters based on determined schedule

End

*First time slot*

*Second time slot*

## FIG. 15

Consumed power

Reference power

Water heater

Predicted value for power consumed by
electrical equipment of individual dwellings
and electrical equipment of common area

t0

Time

Boiling start t1

(a)

Consumed power

Reference power

Water heater

Predicted value for power consumed by
electrical equipment of individual dwellings
and electrical equipment of common area

t0

Boiling end t3

Time

Boiling start t1

(b)

EP 4 546 247 A1

# FIG. 16

S90

S100

Obtain first used power at
present time by electrical
equipment aside from
plurality of water heaters in
housing complex

S101

Based on plurality of first
boiling amounts and first
used power, does demand
power in second time slot
exceed reference power?

No

Yes

S102

Update schedule to stop
boiling by plurality of water
heaters

Second time slot

S110

Control boiling by plurality of
water heaters based on
updated schedule

S90

Control boiling by plurality of
water heaters based on
determined schedule

End

## FIG. 17

(a)

(b)

# FIG. 18

S40

S60

Based on determined schedule and reference power, demand power of overall housing complex determined to exceed reference power in second time slot?

No

First time slot

Yes

S61

Update schedule to supply power to housing complex from power supply equipment

Second time slot

S110

Control boiling by plurality of water heaters based on updated schedule

S90

Control boiling by plurality of water heaters based on determined schedule

End

# FIG. 19

S40

S65

Is planned end time of boiling by second water heater in first time slot in determined schedule?

No

Yes

S66

Update schedule to supply power from power supply equipment for boiling by second water heater in first time slot

First time slot

Second time slot

S110

Control boiling by plurality of water heaters based on updated schedule

S90

Control boiling by plurality of water heaters based on determined schedule

End

## FIG. 20

```
                    ┌─────────┐
                    │  Start  │
                    └────┬────┘
                         │
                         ▼            ╱S70
First price is lowest ╱Determine lowest price╲  Third price is lowest
        ┌─────────────┤ among first price, second├─────────────┐
        │             ╲ price, and third price  ╱               │
        │                    └────┬────┘                        │
        │              Second price is lowest                   │
        │                         │                             │
        ▼       ╱S71              ▼        ╱S72                  ▼       ╱S73
┌─────────────────┐   ┌─────────────────┐   ┌─────────────────┐
│Determine boiling │   │Determine boiling │   │Determine boiling │
│information such  │   │information such  │   │information such  │
│that boiling      │   │that boiling      │   │that boiling      │
│by fifth water    │   │by fifth water    │   │by fifth water    │
│heater is         │   │heater is         │   │heater is         │
│performed using   │   │performed using   │   │performed using   │
│power supplied    │   │power charged by  │   │power generated   │
│from power supply │   │charging          │   │by solar power    │
│equipment         │   │equipment         │   │generation        │
│                  │   │                  │   │equipment         │
└────────┬─────────┘   └────────┬─────────┘   └────────┬─────────┘
         │                      │                      │
         └──────────────────────┼──────────────────────┘
                                ▼            ╱S74
                    ┌─────────────────────┐
                    │Control boiling by    │
                    │fifth water heater    │
                    │based on determined   │
                    │boiling control       │
                    │information           │
                    └──────────┬───────────┘
                               ▼
                         ┌─────────┐
                         │   End   │
                         └─────────┘
```

First time slot

EP 4 546 247 A1

# FIG. 21

(a)

(b)

# FIG. 22

```
                        ┌─────────────┐
                        │    Start    │◄─────────────────┐
                        └──────┬──────┘                  │
                               │                         │
                               ▼         ⌐S80            │
 ┌─  ┌─────────────────────────────────────────────┐    │
 │   │ Obtain second boiling amount                 │    │
 │   │ based on first expected usage                │    │
 │   │ amount of hot water in next                  │    │
 │   │ first time slot                              │    │
 │   └───────────────────┬─────────────────────────┘    │
 │                       │         ⌐S81                  │
 │                       ▼                               │
 │   ┌─────────────────────────────────────────────┐    │
 │   │ Determine second boiling                     │    │
 │   │ amount as boiling amount of                  │    │
 │   │ water heater in second time slot             │    │
 │   └───────────────────┬─────────────────────────┘    │
 │                       │         ⌐S82                  │
 │                       ▼                               │
 │   ┌─────────────────────────────────────────────┐    │
 │   │ Control boiling by water heater              │    │
 │   │ based on determined boiling                  │    │
 │   │ amount                                       │    │
 │   └───────────────────┬─────────────────────────┘    │
 └─                      └──────────────────────────────┘
```

Second time slot

# FIG. 23

**Housing complex** — 40

**First individual dwelling** — 10a
- First water heater — 11a
- Electrical equipment — 12

**Second individual dwelling** — 10b
- Second water heater — 11b
- Electrical equipment — 12

**Third individual dwelling** — 10c
- Third water heater — 11c
- Electrical equipment — 12

**Fourth individual dwelling** — 10d
- Fourth water heater — 11d
- Electrical equipment — 12

**Fifth individual dwelling** — 10e
- Fifth water heater — 11e
- Electrical equipment — 12

**Hot water supply system** — 100a
- Communicator — 110
- Obtainer — 120
- Determiner — 130
- Controller — 140
- Storage — 150

**Common area** — 20
- Electrical equipment — 21
- Power supply equipment — 23
- Power supply device — 24

High-voltage power reception point — 30

## INTERNATIONAL SEARCH REPORT

| | |
|---|---|
| International application No. | |
| | **PCT/JP2023/019141** |

### A. CLASSIFICATION OF SUBJECT MATTER

***G06Q 50/06***(2012.01)i; ***F24H 1/18***(2022.01)i; ***F24H 15/168***(2022.01)i; ***F24H 15/20***(2022.01)i; ***F24H 15/277***(2022.01)i; ***F24H 15/296***(2022.01)i; ***F24H 15/30***(2022.01)i; ***F24H 15/395***(2022.01)i

FI:  F24H15/168; F24H15/20; F24H15/30; F24H15/395; F24H15/277; F24H15/296; G06Q50/06; F24H1/18 A

According to International Patent Classification (IPC) or to both national classification and IPC

### B. FIELDS SEARCHED

Minimum documentation searched (classification system followed by classification symbols)

G06Q50/06; F24H1/18; F24H15/168; F24H15/20; F24H15/277; F24H15/296; F24H15/30; F24H15/395

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2010-270997 A (CHUGOKU ELECTRIC POWER CO INC) 02 December 2010 (2010-12-02)<br>    paragraphs [0019]-[0053], [0060], fig. 1-12 | 1, 17 |
| A | | 2-16 |
| Y | JP 2012-97949 A (MITSUBISHI ELECTRIC CORP) 24 May 2012 (2012-05-24)<br>    paragraph [0003] | 1, 17 |
| A |     paragraphs [0011]-[0082], fig. 1-8 | 1-17 |
| Y | JP 2015-12720 A (DAIKIN IND LTD) 19 January 2015 (2015-01-19)<br>    paragraphs [0026]-[0109], fig. 1-11 | 1, 17 |
| A | | 2-16 |
| A | JP 2015-4458 A (MITSUBISHI ELECTRIC CORP) 08 January 2015 (2015-01-08)<br>    paragraphs [0011]-[0061], fig. 1-5 | 1-17 |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 July 2023** | **08 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

<table>
<tr><td colspan="3" align="center">**INTERNATIONAL SEARCH REPORT**</td><td colspan="2">International application No.<br>**PCT/JP2023/019141**</td></tr>
<tr><td colspan="5">C.     DOCUMENTS CONSIDERED TO BE RELEVANT</td></tr>
<tr><td>Category*</td><td colspan="3">Citation of document, with indication, where appropriate, of the relevant passages</td><td>Relevant to claim No.</td></tr>
<tr><td>A</td><td colspan="3">JP 2016-223703 A (TOKYO ELECTRIC POWER CO HOLDINGS INC) 28 December 2016 (2016-12-28)<br>     paragraphs [0018]-[0041], fig. 1-4</td><td>1-17</td></tr>
</table>

Form PCT/ISA/210 (second sheet) (January 2015)

INTERNATIONAL SEARCH REPORT
Information on patent family members

International application No.

**PCT/JP2023/019141**

| Patent document cited in search report | | | Publication date (day/month/year) | Patent family member(s) | Publication date (day/month/year) |
|---|---|---|---|---|---|
| JP | 2010-270997 | A | 02 December 2010 | (Family: none) | |
| JP | 2012-97949 | A | 24 May 2012 | (Family: none) | |
| JP | 2015-12720 | A | 19 January 2015 | (Family: none) | |
| JP | 2015-4458 | A | 08 January 2015 | (Family: none) | |
| JP | 2016-223703 | A | 28 December 2016 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012225601 A